# EUROPEAN PATENT APPLICATION

(11) **EP 4 765 907 A1**
(43) Date of publication of application: **24.06.2026**
(21) Application number: 24853262.4
(22) Date of filing: 08.05.2024
(51) Int. Cl.: H04W 8/24

(54) **USER EQUIPMENT CAPABILITY MANAGEMENT METHOD AND APPARATUS UNDER RAN SERVITIZATION, AND STORAGE MEDIUM**

(30) Priority: 15.08.2023 CN 202311024793
(71) Applicant: Datang Mobile Communications Equipment Co., Ltd., Beijing 100085 (CN)
(72) Inventor: GU, Xiaofei, Beijing 100085 (CN); ZHANG, Dajun, Beijing 100085 (CN); XIONG, Chunshan, Beijing 100085 (CN); XU, Hui, Beijing 100085 (CN)
(74) Representative: Studio Torta S.p.A.
(86) International application number: PCT/CN2024/091803
(87) International publication number: WO 2025/035846

(57) **Abstract**

The present disclosure provides a UE capability management method and apparatus under RAN servitization, and a storage medium, and relates to the field of communication technology. The UE capability management method includes: a UE acquiring UE capability information and sending the UE capability information to a first network element; the first network element receiving the UE capability information sent by the UE and managing the UE capability information. The first network element is an access network element under the RAN servitization, or the first network element is a core network element under the RAN servitization. The present disclosure enables that each core network element can obtain the UE capability information from the first network element, thereby initiating a corresponding service process according to the UE capability information, and ensuring the normal operation of each service process under the RAN servitization.

## Description

The present disclosure claims priority to the Chinese Patent Application No. 202311024793.6, filed with the China National Intellectual Property Administration on August 15, 2023, entitled "USER EQUIPMENT CAPABILITY MANAGEMENT METHOD AND APPARATUS UNDER RAN SERVITIZATION, AND STORAGE MEDIUM", which is hereby incorporated by reference in its entirety.

### TECHNICAL FIELD

The present disclosure relates to the field of communication technologies, and in particular, to a user equipment capability management method and apparatus under RAN servitization, and a storage medium.

### BACKGROUND

Under the fifth-generation mobile communication (5G) technology, UE capabilities mainly include UE network capability and UE radio capability. The core network needs to allocate appropriate resources and algorithms to it according to UE capability.

Currently, when a UE accesses a network for the first time, the UE capability is sent to an Access and Mobility Management Function (Access and Mobility Management Function, AMF) of a core network through a User Equipment Capability Info Indication (User Equipment Capability Info Indication) in the registration process message. When the UE capability of the UE changes, a registration update process needs to be initiated to send the latest UE capability to the AMF. That is to say, there are many types of UE capabilities, and the UE capabilities are stored and managed by the AMF.

However, with the development of Radio Access Network (Radio Access Network, RAN) servitization, storing and managing the UE capability through the AMF can no longer meet the system requirements under the RAN servitization, and there are cases where normal services cannot be performed. Therefore, there is an urgent need for a UE capability management solution under the RAN servitization.

### SUMMARY

The present disclosure provides a UE capability management method and apparatus under RAN servitization, and a storage medium, which is configured to provide a UE capability management solution under the RAN servitization, so as to meet system requirements under the RAN servitization and ensure the normal operation of various service processes under the RAN servitization.

In a first aspect, the present disclosure provides a UE capability management method under RAN servitization, which is applied to a first network element. The first network element is an access network element under the RAN servitization, or the first network element is a core network element under the RAN servitization. The UE capability management method includes:
receiving UE capability information sent by a UE; and
managing the UE capability information.

Optionally, the first network element is the access network element, a second network element is the core network element, the second network element subscribes to the UE capability information from the access network element, and the managing the UE capability information includes: sending the UE capability information to the second network element.

Optionally, the UE capability information sent by the UE and received by the access network element includes UE network capability information, and the managing the UE capability information includes: sending a first enquiry request to the UE, where the first enquiry request is used to enquire UE radio capability information; receiving the UE radio capability information sent by the UE; and managing the UE radio capability information.

Optionally, the UE capability information sent by the UE and received by the access network element includes UE radio capability information, and the managing the UE capability information includes: sending a second enquiry request to the UE, where the second enquiry request is used to enquire UE network capability information; receiving the UE network capability information sent by the UE; and managing the UE network capability information.

Optionally, the managing the UE capability information includes: if it is determined that a service scope for the UE is not satisfied, transmitting the UE capability information to a corresponding updated access network element; sending a first notification message to the second network element, where the first notification message is used to notify the second network element to subscribe to the UE capability information from the updated access network element, the first notification message carries network element information corresponding to the updated access network element; receiving a first unsubscription request sent by the second network element, where the first unsubscription request is used to instruct the second network element to stop subscribing to the UE capability information from an access network element before update.

Optionally, the first network element is the core network element, the UE capability information sent by the UE and received by the core network element includes UE network capability information, the managing the UE capability information includes: sending a third enquiry request to the UE, where the third enquiry request is used to enquire UE radio capability information; receiving the UE radio capability information sent by the UE; and managing the UE radio capability information.

Optionally, the managing the UE capability information includes: if it is determined that a service scope for the UE is not satisfied, transmitting the UE capability information to a corresponding updated core network element.

Optionally, the first network element is an access and mobility management function AMF in the core network element, a third network element is a non-AMF network element in the core network element, the third network element subscribes to the UE capability information from the AMF, and the managing the UE capability information includes: sending the UE capability information to the third network element.

Optionally, the UE capability information sent by the UE and received by the AMF includes UE network capability information, the managing the UE capability information includes: sending an initial context setup request message to an access network, where the request message does not carry UE radio capability information; receiving the UE radio capability information sent by the access network, where the UE radio capability information is obtained by the access network sending a fourth enquiry request to the UE, the fourth enquiry request is used to enquire the UE radio capability information; and managing the UE radio capability information.

Optionally, the managing the UE capability information includes: if it is determined that the service scope for the UE is not satisfied, transmitting the UE capability information to a corresponding updated AMF; sending a second notification message to the third network element, where the second notification message is used to notify the third network element to subscribe to the UE capability information from the updated AMF, the second notification message carries network element information corresponding to the updated AMF; and receiving a second unsubscription request sent by the third network element, where the second unsubscription request is used to instruct the third network element to stop subscribing to the UE capability information from the AMF before update.

Optionally, the subscribing to the UE capability information includes subscribing to all UE capability information or subscribing to UE capability information corresponding to service requirements.

Optionally, the UE capability information includes updated UE capability information.

Optionally, the managing the UE capability information includes: receiving UE status information sent by the UE, where the UE status information is used to indicate that the UE is in a deregistered state; and deleting the UE capability information corresponding to the UE.

Optionally, the UE capability information includes UE network capability information and UE radio capability information.

Optionally, the UE capability information further includes at least one of the following: sensing capability information, artificial intelligence (Artificial Intelligence, AI) capability information, or computing capability information.

Optionally, the UE capability information is represented in the form of a UE category, and/or the UE capability information is represented in the form of a UE network capability information element.

In a second aspect, the present disclosure provides a UE capability management method under RAN servitization, which is applied to a UE. The UE capability management method includes:
acquiring UE capability information; and
sending the UE capability information to a first network element, where the first network element is an access network element under the RAN servitization, or the first network element is a core network element under the RAN servitization.

Optionally, the first network element is the access network element, and the sending the UE capability information to the first network element includes: receiving a first enquiry request sent by the access network element, where the first enquiry request is used to enquire UE radio capability information, the first enquiry request is sent by the access network element when the UE capability information sent by the UE and received by the access network element includes UE network capability information; acquiring the UE radio capability information; and sending the UE radio capability information to the access network element.

Optionally, the sending the UE capability information to the first network element includes: receiving a second enquiry request sent by the access network element, where the second enquiry request is used to enquire UE network capability information, the second enquiry request is sent by the access network element when the UE capability information sent by the UE and received by the access network element includes UE radio capability information; acquiring the UE network capability information; and sending the UE network capability information to the access network element.

Optionally, the first network element is the core network element, and the sending the UE capability information to the first network element includes: receiving a third enquiry request sent by the core network element, where the third enquiry request is used to enquire UE radio capability information, the third enquiry request is sent by the core network element when the UE capability information sent by the UE and received by the core network element includes UE network capability information; acquiring the UE radio capability information; and sending the UE radio capability information to the core network element.

Optionally, the first network element is an AMF in the core network element, and the sending the UE capability information to the first network element includes: receiving a fourth enquiry request sent by an access network, where the fourth enquiry request is used to enquire UE radio capability information, the fourth enquiry request is sent by the access network when the access network receives an initial context setup request message sent by the AMF, the request message does not carry UE radio capability information; and sending the UE radio capability information to the access network.

Optionally, the sending the UE capability information to the first network element includes: if it is determined that the UE capability information changes and the UE is in an idle state, acquiring updated UE capability information; and sending the updated UE capability information to the first network element.

Optionally, the sending the UE capability information to the first network element includes: if it is determined that the UE capability information changes and the UE is in a connected state, adjusting, by the UE, a state from the connected state to an idle state; acquiring updated UE capability information; and sending the updated UE capability information to the first network element.

Optionally, the sending the UE capability information to the first network element includes: if it is determined that the UE is in a deregistered state, sending UE status information to the first network element, where the UE status information is used to indicate that the UE is in the deregistered state.

Optionally, the UE capability information includes UE network capability information and UE radio capability information.

Optionally, the UE capability information further includes at least one of the following: sensing capability information, AI capability information, or computing capability information.

Optionally, the UE capability information is represented in the form of a UE category, and/or the UE capability information is represented in the form of a UE network capability information element.

In a third aspect, the present disclosure provides a UE capability management method under RAN servitization, which is applied to a second network element or a third network element. The second network element subscribes to UE capability information from a first network element, the first network element is an access network element under the RAN servitization, or the third network element subscribes to the UE capability information from the first network element, the first network element is an access and mobility management function AMF in a core network element under the RAN servitization. The UE capability management method includes:
receiving the UE capability information sent by the first network element; and
managing the UE capability information.

In a fourth aspect, the present disclosure provides a UE capability management apparatus under RAN servitization, which is applied to a first network element. The first network element is an access network element under the RAN servitization, or the first network element is a core network element under the RAN servitization. The UE capability management apparatus includes a memory, a transceiver, and a processor:
where the memory is configured to store a computer program;
the transceiver is configured to send and receive data under control of the processor; and
the processor is configured to read the computer program in the memory and perform the following operations:
   receiving UE capability information sent by a UE; and
   managing the UE capability information.

Optionally, the first network element is the access network element, a second network element is the core network element, the second network element subscribes to the UE capability information from the access network element, and in the process of managing the UE capability information, the processor is configured to perform the following operation: sending the UE capability information to the second network element.

Optionally, the UE capability information sent by the UE and received by the access network element includes UE network capability information, and in the process of managing the UE capability information, the processor is configured to perform the following operations: sending a first enquiry request to the UE, where the first enquiry request is used to enquire UE radio capability information; receiving the UE radio capability information sent by the UE; and managing the UE radio capability information.

Optionally, the UE capability information sent by the UE and received by the access network element includes UE radio capability information, and in the process of managing the UE capability information, the processor is configured to perform the following operations: sending a second enquiry request to the UE, where the second enquiry request is used to enquire UE network capability information; receiving the UE network capability information sent by the UE; and managing the UE network capability information.

Optionally, in the process of managing the UE capability information, the processor is configured to perform the following operations: if it is determined that a service scope for the UE is not satisfied, transmitting the UE capability information to a corresponding updated access network element; sending a first notification message to the second network element, where the first notification message is used to notify the second network element to subscribe to the UE capability information from the updated access network element, the first notification message carries network element information corresponding to the updated access network element; and receiving a first unsubscription request sent by the second network element, where the first unsubscription request is used to instruct the second network element to stop subscribing to the UE capability information from an access network element before update.

Optionally, the first network element is the core network element, the UE capability information sent by the UE and received by the core network element includes UE network capability information, and in the process of managing the UE capability information, the processor is configured to perform the following operations: sending a third enquiry request to the UE, where the third enquiry request is used to enquire UE radio capability information; receiving the UE radio capability information sent by the UE; and managing the UE radio capability information.

Optionally, in the process of managing the UE capability information, the processor is configured to perform the following operation: if it is determined that a service scope for the UE is not satisfied, transmitting the UE capability information to a corresponding updated core network element.

Optionally, the first network element is an AMF in the core network element, a third network element is a non-AMF network element in the core network element, the third network element subscribes to the UE capability information from the AMF, and in the process of managing the UE capability information, the processor is configured to perform the following operation: sending the UE capability information to the third network element.

Optionally, the UE capability information sent by the UE and received by the AMF includes UE network capability information, and in the process of managing the UE capability information, the processor is configured to perform the following operations: sending an initial context setup request message to an access network, where the request message does not carry UE radio capability information; receiving the UE radio capability information sent by the access network, where the UE radio capability information is obtained by the access network sending a fourth enquiry request to the UE, the fourth enquiry request is used to enquire the UE radio capability information; and managing the UE radio capability information.

Optionally, in the process of managing the UE capability information, the processor is configured to perform the following operations: if it is determined that the service scope for the UE is not satisfied, transmitting the UE capability information to a corresponding updated AMF; sending a second notification message to the third network element, where the second notification message is used to notify the third network element to subscribe to the UE capability information from the updated AMF, the second notification message carries network element information corresponding to the updated AMF; and receiving a second unsubscription request sent by the third network element, where the second unsubscription request is used to instruct the third network element to stop subscribing to the UE capability information from the AMF before update.

Optionally, the subscribing to the UE capability information includes subscribing to all UE capability information or subscribing to UE capability information corresponding to service requirements.

Optionally, the UE capability information includes updated UE capability information.

Optionally, in the process of managing the UE capability information, the processor is configured to perform the following operations: receiving UE status information sent by the UE, where the UE status information is used to indicate that the UE is in a deregistered state; and deleting the UE capability information corresponding to the UE.

Optionally, the UE capability information includes UE network capability information and UE radio capability information.

Optionally, the UE capability information further includes at least one of the following: sensing capability information, AI capability information, or computing capability information.

Optionally, the UE capability information is represented in the form of a UE category, and/or the UE capability information is represented in the form of a UE network capability information element.

In a fifth aspect, the present disclosure provides a UE capability management apparatus under RAN servitization, which is applied to a UE. The UE capability management apparatus includes a memory, a transceiver, and a processor:
where the memory is configured to store a computer program;
the transceiver is configured to send and receive data under the control of the processor; and
the processor is configured to read the computer program in the memory and perform the following operations:
   acquiring UE capability information; and
   sending the UE capability information to a first network element, where the first network element is an access network element under the RAN servitization, or the first network element is a core network element under the RAN servitization.

Optionally, the first network element is the access network element, and in the process of sending the UE capability information to the first network element, the processor is configured to perform the following operations: receiving a first enquiry request sent by the access network element, where the first enquiry request is used to enquire UE radio capability information, the first enquiry request is sent by the access network element when the UE capability information sent by the UE and received by the access network element includes UE network capability information; acquiring the UE radio capability information; and sending the UE radio capability information to the access network element.

Optionally, in the process of sending the UE capability information to the first network element, the processor is configured to perform the following operations: receiving a second enquiry request sent by the access network element, where the second enquiry request is used to enquire UE network capability information, the second enquiry request is sent by the access network element when the UE capability information sent by the UE and received by the access network element includes UE radio capability information; acquiring the UE network capability information; and sending the UE network capability information to the access network element.

Optionally, the first network element is the core network element, and in the process of sending the UE capability information to the first network element, the processor is configured to perform the following operations: receiving a third enquiry request sent by the core network element, where the third enquiry request is used to enquire UE radio capability information, the third enquiry request is sent by the core network element when the UE capability information sent by the UE and received by the core network element includes UE network capability information; acquiring the UE radio capability information; and sending the UE radio capability information to the core network element.

Optionally, the first network element is an AMF in the core network element, and in the process of sending the UE capability information to the first network element, the processor is configured to perform the following operations: receiving a fourth enquiry request sent by an access network, where the fourth enquiry request is used to enquire UE radio capability information, the fourth enquiry request is sent by the access network when the access network receives an initial context setup request message sent by the AMF, the request message does not carry UE radio capability information; and sending the UE radio capability information to the access network.

Optionally, in the process of sending the UE capability information to the first network element, the processor is configured to perform the following operations: if it is determined that the UE capability information changes and the UE is in an idle state, acquiring updated UE capability information; and sending the updated UE capability information to the first network element.

Optionally, in the process of sending the UE capability information to the first network element, the processor is configured to perform the following operations: if it is determined that the UE capability information changes and the UE is in a connected state, adjusting, by the UE, a state from the connected state to an idle state; acquiring updated UE capability information; and sending the updated UE capability information to the first network element.

Optionally, in the process of sending the UE capability information to the first network element, the processor is configured to perform the following operation: if it is determined that the UE is in a deregistered state, sending UE status information to the first network element, where the UE status information is used to indicate that the UE is in the deregistered state.

Optionally, the UE capability information includes UE network capability information and UE radio capability information.

Optionally, the UE capability information further includes at least one of the following: sensing capability information, AI capability information, or computing capability information.

Optionally, the UE capability information is represented in the form of a UE category, and/or the UE capability information is represented in the form of a UE network capability information element.

In a sixth aspect, the present disclosure provides a UE capability management apparatus under RAN servitization, which is applied to a second network element or a third network element. The second network element subscribes to UE capability information from a first network element, the first network element is an access network element under the RAN servitization, or the third network element subscribes to the UE capability information from the first network element, the first network element is an AMF in a core network element under the RAN servitization. The UE capability management apparatus includes a memory, a transceiver, and a processor:
where the memory is configured to store a computer program;
the transceiver is configured to send and receive data under the control of the processor; and
the processor is configured to read the computer program in the memory and perform the following operations:
   receiving the UE capability information sent by the first network element; and
   managing the UE capability information.

In a seventh aspect, the present disclosure provides a UE capability management apparatus under RAN servitization, which is applied to a first network element. The first network element is an access network element under the RAN servitization, or the first network element is a core network element under the RAN servitization. The UE capability management apparatus includes:
a receiving unit, configured to receive UE capability information sent by a UE; and
a processing unit, configured to manage the UE capability information.

Optionally, the first network element is the access network element, a second network element is the core network element, the second network element subscribes to the UE capability information from the access network element, and the processing unit is specifically configured to: send the UE capability information to the second network element.

Optionally, the UE capability information sent by the UE and received by the access network element includes UE network capability information, and the processing unit is specifically configured to: send a first enquiry request to the UE, where the first enquiry request is used to enquire UE radio capability information; receive the UE radio capability information sent by the UE; and manage the UE radio capability information.

Optionally, the UE capability information sent by the UE and received by the access network element includes UE radio capability information, and the processing unit is specifically configured to: send a second enquiry request to the UE, where the second enquiry request is used to enquire UE network capability information; receive the UE network capability information sent by the UE; and manage the UE network capability information.

Optionally, the processing unit is specifically configured to: if it is determined that a service scope for the UE is not satisfied, transmit the UE capability information to a corresponding updated access network element; send a first notification message to the second network element, where the first notification message is used to notify the second network element to subscribe to the UE capability information from the updated access network element, the first notification message carries network element information corresponding to the updated access network element; and receive a first unsubscription request sent by the second network element, where the first unsubscription request is used to instruct the second network element to stop subscribing to the UE capability information from an access network element before update.

Optionally, the first network element is the core network element, the UE capability information sent by the UE and received by the core network element includes UE network capability information, and the processing unit is specifically configured to: send a third enquiry request to the UE, where the third enquiry request is used to enquire UE radio capability information; receive the UE radio capability information sent by the UE; and manage the UE radio capability information.

Optionally, the processing unit is specifically configured to: if it is determined that a service scope for the UE is not satisfied, transmit the UE capability information to a corresponding updated core network element.

Optionally, the first network element is an AMF in the core network element, a third network element is a non-AMF network element in the core network element, the third network element subscribes to the UE capability information from the AMF, and the processing unit is specifically configured to: send the UE capability information to the third network element.

Optionally, the UE capability information sent by the UE and received by the AMF includes UE network capability information, and the processing unit is specifically configured to: send an initial context setup request message to an access network, where the request message does not carry UE radio capability information; receive the UE radio capability information sent by the access network, where the UE radio capability information is obtained by the access network sending a fourth enquiry request to the UE, the fourth enquiry request is used to enquire the UE radio capability information; and manage the UE radio capability information.

Optionally, the processing unit is specifically configured to: if it is determined that the service scope for the UE is not satisfied, transmit the UE capability information to a corresponding updated AMF; send a second notification message to the third network element, where the second notification message is used to notify the third network element to subscribe to the UE capability information from the updated AMF, the second notification message carries network element information corresponding to the updated AMF; and receive a second unsubscription request sent by the third network element, where the second unsubscription request is used to instruct the third network element to stop subscribing to the UE capability information from the AMF before update.

Optionally, the subscribing to the UE capability information includes subscribing to all UE capability information or subscribing to UE capability information corresponding to service requirements.

Optionally, the UE capability information includes updated UE capability information.

Optionally, the processing unit is specifically configured to: receive UE status information sent by the UE, where the UE status information is used to indicate that the UE is in a deregistered state; and delete the UE capability information corresponding to the UE.

Optionally, the UE capability information includes UE network capability information and UE radio capability information.

Optionally, the UE capability information further includes at least one of the following: sensing capability information, AI capability information, or computing capability information.

Optionally, the UE capability information is represented in the form of a UE category, and/or the UE capability information is represented in the form of a UE network capability information element.

In an eighth aspect, the present disclosure provides a UE capability management apparatus under RAN servitization, which is applied to a UE. The UE capability management apparatus includes:
an acquisition unit, configured to acquire UE capability information; and
a sending unit, configured to send the UE capability information to a first network element, where the first network element is an access network element under the RAN servitization, or the first network element is a core network element under the RAN servitization.

Optionally, the first network element is the access network element, and the sending unit is specifically configured to: receive a first enquiry request sent by the access network element, where the first enquiry request is used to enquire UE radio capability information, the first enquiry request is sent by the access network element when the UE capability information sent by the UE and received by the access network element includes UE network capability information; acquire the UE radio capability information; and send the UE radio capability information to the access network element.

Optionally, the sending unit is specifically configured to: receive a second enquiry request sent by the access network element, where the second enquiry request is used to enquire UE network capability information, the second enquiry request is sent by the access network element when the UE capability information sent by the UE and received by the access network element includes UE radio capability information; acquire the UE network capability information; and send the UE network capability information to the access network element.

Optionally, the first network element is the core network element, and the sending unit is specifically configured to: receive a third enquiry request sent by the core network element, where the third enquiry request is used to enquire UE radio capability information, the third enquiry request is sent by the core network element when the UE capability information sent by the UE and received by the core network element includes UE network capability information; acquire the UE radio capability information; and send the UE radio capability information to the core network element.

Optionally, the first network element is an AMF in the core network element, and the sending unit is specifically configured to: receive a fourth enquiry request sent by an access network, where the fourth enquiry request is used to enquire UE radio capability information, the fourth enquiry request is sent by the access network when the access network receives an initial context setup request message sent by the AMF, the request message does not carry UE radio capability information; and send the UE radio capability information to the access network.

Optionally, the sending unit is specifically configured to: if it is determined that the UE capability information changes and the UE is in an idle state, acquire updated UE capability information; and send the updated UE capability information to the first network element.

Optionally, the sending unit is specifically configured to: if it is determined that the UE capability information changes and the UE is in a connected state, adjust, by the UE, a state from the connected state to an idle state; acquire updated UE capability information; and send the updated UE capability information to the first network element.

Optionally, the sending unit is specifically configured to: if it is determined that the UE is in a deregistered state, send UE status information to the first network element, where the UE status information is used to indicate that the UE is in the deregistered state.

Optionally, the UE capability information includes UE network capability information and UE radio capability information.

Optionally, the UE capability information further includes at least one of the following: sensing capability information, AI capability information, or computing capability information.

Optionally, the UE capability information is represented in the form of a UE category, and/or the UE capability information is represented in the form of a UE network capability information element.

In a ninth aspect, the present disclosure provides a UE capability management apparatus under RAN servitization, which is applied to a second network element or a third network element. The second network element subscribes to UE capability information from a first network element, the first network element is an access network element under the RAN servitization, or the third network element subscribes to the UE capability information from the first network element, the first network element is an access and mobility management function AMF in a core network element under the RAN servitization. The UE capability management apparatus includes:
a receiving unit, configured to receive the UE capability information sent by the first network element; and
a processing unit, configured to manage the UE capability information.

In a tenth aspect, the present disclosure provides a processor-readable storage medium, the processor-readable storage medium stores a computer program, and the computer program is configured to cause a processor to execute the UE capability management method under the RAN servitization provided in the first aspect, the second aspect, and/or the third aspect described above.

In an eleventh aspect, the present disclosure provides a computer program product including instructions, when the instructions are run on a computer, the computer is caused to execute the UE capability management method under the RAN servitization provided in the first aspect, the second aspect, and/or the third aspect described above.

According to the UE capability management method, apparatus, and storage medium under RAN servitization provided by the present disclosure, the UE acquires UE capability information by the UE and sends the UE capability information to a first network element; correspondingly, the first network element receives the UE capability information sent by the UE and manages the UE capability information. The first network element is an access network element under the RAN servitization, or the first network element is a core network element under the RAN servitization. That is, the UE capability information can be managed through the access network element under the RAN servitization, or through the core network element under the RAN servitization, instead of managing the UE capability information through AMF as in the current related art. The present disclosure enables that each core network element can obtain the UE capability information from the first network element, thereby initiating a corresponding service process according to the UE capability information, and ensuring the normal operation of each service process under the RAN servitization.

It should be understood that the contents described in the above summary section are not intended to limit the key or important features of the embodiments of the present disclosure, nor are intended to limit the scope of the present disclosure. Other features of the present disclosure will become easier to understand through the following description.

### BRIEF DESCRIPTION OF DRAWINGS

In order to more clearly illustrate the technical solutions in the present disclosure or the prior art, the following will briefly introduce the drawings required for use in the embodiments or prior art descriptions. Obviously, the drawings in the following description are some embodiments of the present disclosure. For ordinary technicians in this field, other drawings can also be obtained based on these drawings without creative labor.
FIG. 1 is a schematic diagram of a process for enquiring and reporting UE capability provided by a related art.
FIG. 2 is a schematic diagram of managing UE capability information through a newly added access network element provided by an embodiment of the present disclosure.
FIG. 3 is a schematic diagram of managing UE capability information through a core network element provided by an embodiment of the present disclosure.
FIG. 4 is a schematic diagram of managing UE capability information through an AMF provided by an embodiment of the present disclosure.
FIG. 5 is a schematic diagram of an application scenario provided by an embodiment of the present disclosure.
FIG. 6 is a first schematic flowchart of a UE capability management method under RAN servitization provided by an embodiment of the present disclosure.
FIG. 7 is a second schematic flowchart of a UE capability management method under RAN servitization provided by an embodiment of the present disclosure.
FIG. 8 is a third schematic flowchart of a UE capability management method under RAN servitization provided by an embodiment of the present disclosure.
FIG. 9 is a fourth schematic flowchart of a UE capability management method under RAN servitization provided by an embodiment of the present disclosure.
FIG. 10 is a fifth schematic flowchart of a UE capability management method under RAN servitization provided by an embodiment of the present disclosure.
FIG. 11 is a sixth schematic flowchart of a UE capability management method under RAN servitization provided by an embodiment of the present disclosure.
FIG. 12 is a seventh schematic flowchart of a UE capability management method under RAN servitization provided by an embodiment of the present disclosure.
FIG. 13 is an eighth schematic flowchart of a UE capability management method under RAN servitization provided by an embodiment of the present disclosure.
FIG. 14 is a ninth schematic flowchart of a UE capability management method under RAN servitization provided by an embodiment of the present disclosure.
FIG. 15 is a tenth schematic flowchart of a UE capability management method under RAN servitization provided by an embodiment of the present disclosure.
FIG. 16 is an eleventh schematic flowchart of a UE capability management method under RAN servitization provided by an embodiment of the present disclosure.
FIG. 17 is a twelfth schematic flowchart of a UE capability management method under RAN servitization provided by an embodiment of the present disclosure.
FIG. 18 is a thirteenth schematic flowchart of a UE capability management method under RAN servitization provided by an embodiment of the present disclosure.
FIG. 19 is a fourteenth schematic flowchart of a UE capability management method under RAN servitization provided by an embodiment of the present disclosure.
FIG. 20 is a fifteenth schematic flowchart of a UE capability management method under RAN servitization provided by an embodiment of the present disclosure.
FIG. 21 is a sixteenth schematic flowchart of a UE capability management method under RAN servitization provided by an embodiment of the present disclosure.
FIG. 22 is a seventeenth schematic flowchart of a UE capability management method under RAN servitization provided by an embodiment of the present disclosure.
FIG. 23 is an eighteenth schematic flowchart of a UE capability management method under RAN servitization provided by an embodiment of the present disclosure.
FIG. 24 is a first schematic structural diagram of a UE capability management apparatus under RAN servitization provided by an embodiment of the present disclosure.
FIG. 25 is a second schematic structural diagram of a UE capability management apparatus under RAN servitization provided by an embodiment of the present disclosure.
FIG. 26 is a third schematic structural diagram of a UE capability management apparatus under RAN servitization provided by an embodiment of the present disclosure.
FIG. 27 is a fourth schematic structural diagram of a UE capability management apparatus under RAN servitization provided by an embodiment of the present disclosure.
FIG. 28 is a fifth schematic structural diagram of a UE capability management apparatus under RAN servitization provided by an embodiment of the present disclosure.
FIG. 29 is a sixth schematic structural diagram of a UE capability management apparatus under RAN servitization provided by an embodiment of the present disclosure.

### DESCRIPTION OF EMBODIMENTS

In the present disclosure, "at least one" refers to one or more, and "a plurality of" refers to two or more. "And/or" describes the association relationship of associated objects, indicating that three relationships may exist; for example, A and/or B may indicate: A exists alone, A and B exist simultaneously, or B exists alone, where A and B may be singular or plural. The character "/" generally indicates that the associated objects before and after are in an "or" relationship. "At least one of the following (items)" or similar expressions refer to any combination of these items, including any combination of a single item (item) or a plurality of items (items). For example, at least one (item) of a, b, or c may indicate: a, b, c, a-b, a-c, b-c, or a-b-c, where a, b, and c may be single or plural.

It is understandable that each step or operation in the embodiments of the present disclosure is merely an example, and the embodiments of the present disclosure may also perform other operations or variations of various operations. In addition, each step may be performed in a different order from that presented in the embodiments of the present disclosure, and it is possible that not all operations in the embodiments of the present disclosure need to be performed.

The technical solutions in the embodiments of the present disclosure will be clearly and completely described below with reference to the accompanying drawings in the embodiments of the present disclosure. Obviously, the described embodiments are only some of the embodiments of the present disclosure, not all of them. Based on the embodiments in the present disclosure, all other embodiments obtained by ordinary technicians in this field without creative work are within the scope of protection of the present disclosure.

It should be noted that the user information (including but not limited to user equipment information, user personal information, etc.) and data (including but not limited to data used for analysis, stored data, displayed data, etc.) involved in the present disclosure are all information and data authorized by users or fully authorized by all parties. In addition, the collection, use, and processing of relevant data need to comply with relevant laws, regulations, and standards, and corresponding operation entrances shall be provided for users to choose to authorize or refuse.

The technical solutions provided by the embodiments of the present disclosure may be applicable to various systems, especially 5G systems. For example, the applicable systems may include a Global System of Mobile communication (Global System of Mobile communication, GSM) system, a Code Division Multiple Access (Code Division Multiple Access, CDMA) system, a Wideband Code Division Multiple Access (Wideband Code Division Multiple Access, WCDMA) system, a General Packet Radio Service (General Packet Radio Service, GPRS) system, a Long Term Evolution (Long Term Evolution, LTE) system, an LTE Frequency Division Duplex (Frequency Division Duplex, FDD) system, an LTE Time Division Duplex (Time Division Duplex, TDD) system, a Long Term Evolution Advanced (Long Term Evolution Advanced, LTE-A) system, a Universal Mobile Telecommunication System (Universal Mobile Telecommunication System, UMTS), a worldwide interoperability for microwave access (Worldwide Interoperability for Microwave Access, WiMAX) system, a 5G New Radio (New Radio, NR) system, and the like. Each of these various systems includes a UE and a network device. The system may further include a core network part, such as an Evolved Packet System (Evolved Packet System, EPS), a 5G System (5GS), and the like.

The UE involved in the embodiments of the present disclosure may be a device that provides voice and/or data connectivity to a user, a handheld device with a wireless connection function, or another processing device connected to a wireless modem, etc. In different systems, the name of the UE may also be different; for example, in a 5G system, the UE may be referred to as User Equipment (User Equipment, UE). The UE may communicate with one or more Core Networks (Core Networks, CNs) via a Radio Access Network (Radio Access Network, RAN). The UE may be a mobile terminal, such as a mobile phone (or named cellular phone) and a computer with a mobile terminal; for example, it may be a portable, pocket-sized, handheld, computer-built-in, or vehicle-mounted mobile device that exchanges voice and/or data with the wireless access network. For example, devices such as a Personal Communication Service (Personal Communication Service, PCS) phone, a cordless phone, a Session Initiated Protocol (Session Initiated Protocol, SIP) phone, a Wireless Local Loop (Wireless Local Loop, WLL) station, a Personal Digital Assistant (Personal Digital Assistant, PDA), and the like. The wireless UE may also be referred to as a system, a subscriber unit (subscriber unit), a subscriber station (subscriber station), a mobile station (mobile station), a mobile station (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

The network device involved in the embodiments of the present disclosure may be a base station, and the base station may include a plurality of cells providing services for UE. According to different specific application scenarios, the base station may also be referred to as an access point, or a device in the access network that communicates with a wireless UE through one or more sectors on an air interface, or another name. The network device may be used to mutually convert received air frames and Internet Protocol (Internet Protocol, IP) packets, and act as a router between the wireless UE and the rest of the access network, where the rest of the access network may include an Internet Protocol (Internet Protocol, IP) communication network. The network device may also coordinate the attribute management of the air interface. For example, the network device involved in the embodiments of the present disclosure may be a network device (Base Transceiver Station, BTS) in a Global System for Mobile communications (GSM) or Code Division Multiple Access (CDMA), may also be a network device (NodeB) in a Wide-band Code Division Multiple Access (WCDMA), may further be an evolved network device (evolutional Node B, eNB or e-NodeB) in a long term evolution (LTE) system, a 5G base station (gNB) in a 5G network architecture (next generation system), and may also be a Home evolved Node B (HeNB), a relay node (relay node), a femto base station (femto), a pico base station (pico), and the like, which is not limited in the embodiments of the present disclosure. In some network structures, the network device may include a Centralized Unit (Centralized Unit, CU) node and a Distributed Unit (Distributed Unit, DU) node, and the centralized unit and the distributed unit may also be geographically separately arranged.

Between the network device and the UE, one or more antennas may be used respectively for MIMO transmission, and the MIMO transmission may be Single User MIMO (Single User MIMO, SU-MIMO) or Multiple User MIMO (Multiple User MIMO, MU-MIMO). According to the form and quantity of antenna combinations, the MIMO transmission may be 2D-MIMO, 3D-MIMO, FD-MIMO, or massive-MIMO, and may also be diversity transmission, or precoding transmission, or beamforming transmission, etc.

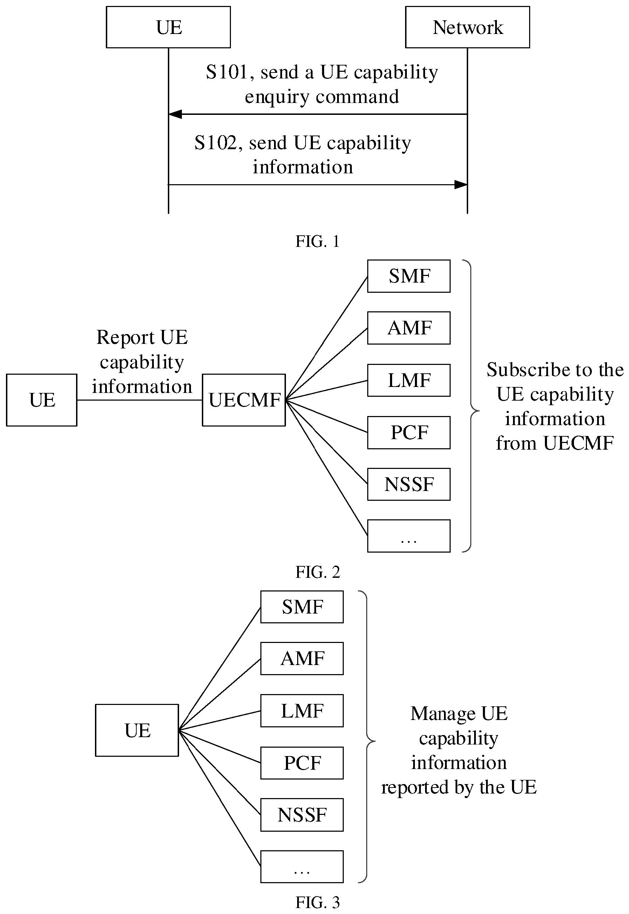

To understand the present disclosure more clearly, first, some technical terms involved in the present disclosure are explained as follows.
1. UE capability: the UE capability includes UE network capability and UE radio capability. Whether for an access network or a core network, many optional functions or optional algorithms are defined in each standard. The core network needs to allocate appropriate resources, functions, and algorithms for it according to the UE capability. When the network side makes various event decisions or executes various algorithms, it needs to know the capability of the UE to make the most appropriate decision. For example, if the UE supports joint attachment initiated by Circuit Switched Fallback (Circuit Switched Fallback, CSFB), the process of execution and processing by the network side will be different at this time; if when the UE does not support the mobility (mobility) of Inter-Radio Access Technology (Inter-Radio Access Technology, Inter-RAT) between different radio access technologies for Packet Switch HandOver (Packet Switch HandOver, PSHO), the network side adopts Network Assisted Cell Change (Network Assisted Cell Change, NACC)/Cell Change Order (Cell Change Order, CCO) or Redirect (Redirect) to implement inter-system operations. Therefore, since the UE capabilities are different and vary greatly, the network side needs to obtain and know the UE capabilities, which requires that the UE capabilities can be reported and synchronized in a certain manner.
2. UE Network Capability: when a UE accesses the network for the first time, it carries UE capability information to the AMF via a registration request message; when the UE network capability information changes, it may carry the latest UE capability information to the AMF via a registration update (non-periodic) request; when the UE capability information changes and the UE is in a registered state, the UE shall first switch to a deregistered state, then initiate a registration update procedure to carry the latest UE capability information to the AMF, which manages the UE capability information. The specific UE network capabilities include:
   (1) security capability supported by the UE: to negotiate a security of a Non-Access-Stratum (Non-Access-Stratum, NAS) between the UE and a Mobile Management Entity (Mobile Management Entity, MME), the UE needs to report its own security capability information to the MME;
   (2) capability to support extended protocol configuration options (extended protocol configuration options): if the UE supports a Narrow Band S1 (Narrow Band S1, NB-S1) mode or a Non-IP Public Data Network (Non-IP Public Data Network, Non-IP PDN) type, an extended protocol configuration options (extended protocol configuration options, ePCO) bit of a UE Network Capability Information Element (UE Network Capability Information Element) is set to "extended protocol configuration options supported" (that is, supporting extended protocol configuration options);
   (3) capability of restriction on use of enhanced coverage (restriction on use of enhanced coverage): if the UE supports the capability of restriction on use of enhanced coverage, a restriction enhanced coverage (Restriction Enhanced Coverage, RestrictEC) bit of the UE network capability information element is set to "restriction on use of enhanced coverage supported" (that is, supporting restriction on use of enhanced coverage);
   (4) control plane data back-off timer T3448 (control plane data back-off timer T3448): if the UE supports control plane data congestion control, a Control Plane back-off (Control Plane back-off, CP backoff) bit of the UE network capability information element is set to "back-off timer for transport of user data via the control plane supported" (that is, supporting a back-off timer for transporting user data via a control plane);
   (5) control plane of Cellular Internet of Things Evolved Packet System (Cellular Internet of Things Evolved Packet System, CIoT EPS) optimization: if the UE is in the NB-S1 mode, the control plane CIoT EPS optimization (control plane CIoT EPS optimization) bit of the UE network capability information element is set to "control plane CIoT EPS optimization supported" (that is, supporting control plane CIoT EPS optimization);
   (6) evolved Packet System Mobility Management (Evolved packet system Mobility Management, EMM) registered without PDN connection (EMM-REGISTERED without PDN connection, ERwPDN): if the UE supports CIoT optimization, it shall indicate whether the EMM-REGISTERED without PDN connection capability is supported in the ERwPDN bit of the UE network capability information;
   (7) S1-U data transfer (S1-U data transfer): this option is only applicable to the NB-S1 mode; different from traditional LTE data transmission which can only be performed via S1-U, since data in the NB-S1 mode can be transmitted either via S1-U or the control plane, if the UE supports S1-U transmission, an S1-U data bit of the UE network capability information element is set to "S1-U data transfer supported" (that is, supporting S1-U data transfer); and
   (8) multiple user plane radio bearers (multiple user plane radio bearers): this option is only applicable to the NB-S1 mode; if the UE supports S1-U transmission and supports establishment of multiple user plane radio bearers, a multiple Data Radio Bearers support (multiple Data Radio Bearers support, multiple DRB support) bit of the UE network capability information element is set to "Multiple DRB supported" (that is, supporting multiple DRBs).
3. UE Radio Capability: the UE radio capability is relatively large and not suitable for frequent transmission over an air interface, so the UE capability information is generally stored in the AMF; when the UE capability information changes, the UE notifies a registration update to notify a UE capability information change message to the AMF, thereby triggering the AMF to update the UE capability information. The specific UE radio capabilities include:
   (1) access stratum release (Access Stratum Release): a 3rd Generation Partnership Project (3rd Generation Partnership Project, 3GPP) release supported by the UE;
   (2) UE category (UE Category): the base station and the UE determine a transmission capability of the UE through the UE category;
   (3) packet data convergence protocol (Packet Data Convergence Protocol, PDCP) parameters (Parameters): a robust header compression (ROHC) capability of the UE;
   (4) radio frequency (Radio Frequency, RF) parameters: a radio frequency capability of the UE represents a band (band) indication and a duplex mode supported by the UE; and
   (5) UE measurement capability: whether a call gap (gap) is needed.
4. UE capability enquiry and reporting: the base station can only correctly schedule the UE after determining the UE capability (UE Capability). If the UE supports a certain function, the base station may configure the function for the UE. If the UE does not support a certain function, the base station shall not configure the function for the UE. FIG. 1 is a schematic diagram of a process for enquiring and reporting UE capability provided by a related art. As shown in FIG. 1, the UE capability enquiry and reporting mainly involve two processes: UE Capability Request and UE Capability Reporting, which specifically include the following steps.

S101, when the base station needs the UE to report the UE Capability, the base station (corresponding to the network side in FIG. 1) sends a UE capability enquiry (UECapabilityEnquiry) command to the UE; and correspondingly, the UE receives the UECapabilityEnquiry command.

S102, the UE sends UE capability information (UECapabilityInformation) to the base station in response to the UECapabilityEnquiry command.

5. UE category (UE Category): the original intention of the 3GPP in formulating the LTE standard is to enable LTE to provide different categories of network service capabilities for different users. Therefore, the concept of UE category is proposed in LTE: different services use different UE categories, and the network provides different bandwidths and rates. "Cat" is the abbreviation of category (Category). According to the definition of 3GPP, UE category indicates the User Equipment (User Equipment) class, representing the uplink and downlink data transmission capabilities supported by the UE. UE Category may be abbreviated as UE Cat, and may also be referred to as UE capability category.

With the evolution of 4G LTE technical specifications, each update introduces new technologies and new UE Cat values. The earliest version of 4G is Release 8 (Release 8, R8), followed by R9, R10, R11, R12, R13, R14, etc. (the 5G UE capability class is defined starting from R15). From R8 to R11, 3GPP defined UE capability classes from Cat1 to Cat12. Starting from R12, the defined UE capability classes are prefixed with Downlink (Downlink, DL) and Uplink (Uplink, UL), where DL indicates the download capability of the UE and UL indicates the upload capability of the UE.

6. UE radio capability management functions (UE Radio Capability Management Functions, UCMF): UCMF is used to store dictionary entries corresponding to a UE radio capability Identity (Identity, ID) assigned by a Public Land Mobile Network (Public Land Mobile Network, PLMN) or the UE manufacturer. The MME may subscribe to the UCMF to obtain new values of the UE radio capability ID from the UCMF, which assigns these new values for the purpose of caching them locally.

From the access stratum (Access Stratum, AS) that interacts with the UCMF directly or via the service creation environment function (Service Creation Environment Function, SCFF) (or via network management), the provisioning of the UE radio capability ID entries assigned by the UE manufacturer in the UCMF is performed. Meanwhile, the UCMF serving both EPS and 5GS shall be required to provide the UE radio capability ID using the format of TS 38.331[89] (a version number of a protocol for specifying the format of the UE radio capability ID), or the format of TS 36.331[37] (a version number of a protocol for specifying the format of the UE radio capability ID), or both formats of the UE radio capability.

For the UE radio capability ID assigned by the PLMN, the UCMF is also the entity that assigns the UE radio capability identifier value. Each UE radio capability ID assigned by the PLMN is also associated with the International Mobile Equipment Identity (International Mobile Equipment Identity, IMEI)/Trace Area Code (Trace Area Code, TAC) of the UE model related to the PLMN. When the MME requests the UCMF to assign a UE radio capability identifier for a set of UE radio capabilities, the MME indicates the IMEI/TAC of the UE related to the UE radio capability information. The UCMF may be equipped with a dictionary of UE radio capability IDs assigned by the UE manufacturer. The dictionary includes the "vendor ID" of the manufacturer applied to these UEs, and a list of IMEIs/TACs for which the PLMN has obtained the UE radio capability IDs assigned by the UE manufacturer.

The UE radio capability ID assigned by the PLMN is maintained in the UCMF memory as long as the UE radio capability ID is associated with at least one IMEI/TAC value. When the IMEI/TAC value is related to a UE model specified to operate based on the UE radio capability ID assigned by the UE manufacturer, the IMEI/TAC value is disassociated from any UE radio capability ID assigned by the PLMN in the UCMF. For the case where the PLMN is configured to store the ID assigned by the PLMN in the operation request list assigned by the UE manufacturer, the UCMF does not delete any UE radio capability ID specified by the PLMN that is no longer used from the operation request list assigned by the UE manufacturer, but isolates it to avoid any re-assignment in the future. The UCMF stores the version ID value of the UE radio capability ID assigned by the PLMN. Therefore, it is included in the UE radio capability ID specified by the PLMN assigned by it. This should be configured in the UCMF.

The UCMF dictionary entry should also include the relevant UE radio capability for paging of each radio access technology (Radio Access Technology, RAT).

With the development of RAN servitization, the anchor point between the core network and the RAN is no longer the AMF. The RAN can perform signaling interaction and process establishment with any core network element (Network Function, NF) in need. For example, the RAN and the AMF can perform mobility-related process interaction, the RAN and a Session Management Function (Session Management Function, SMF) can perform session-related process interaction, the RAN and a Location Management Function (Location Management Function, LMF) can perform process interaction related to positioning, etc. Moreover, with the upgrade of the network and the emergence of new services, the capabilities possessed by UEs are increasing, such as the data processing capability, sensing capability, AI capability, computing capability, and satellite communication capability of the UE. Therefore, storing and managing UE capabilities through the AMF while other core network elements are not aware of the UE capabilities can no longer meet the system requirements under the RAN servitization, and there may be cases where normal services cannot be performed. Therefore, there is an urgent need for a UE capability management solution under the RAN servitization.

To solve the above problems, the embodiments of the present disclosure provide a UE capability management method, an apparatus, and a storage medium under RAN servitization. In the present disclosure, an access network element may be newly added for storing and managing UE network capability information and UE radio capability information. During the relevant signaling process, if other network elements have a need, they may initiate a UE capability acquisition request to the access network element to acquire UE capability. Alternatively, the UE capability is stored and managed by core network elements that needs to directly interact with the RAN, that is, stored and managed by multiple core network elements simultaneously, such as AMF, SMF, LMF, etc. Alternatively, the UE capability is still stored and managed by the AMF, but other core network elements need to subscribe to the UE capability from the AMF. When the AMF receives the reported UE capability, the AMF needs to send the UE capability to the core network elements that subscribes to it, thereby ensuring that when the RAN interacts with other core network elements, the most appropriate decision can be determined in combination with the UE capability. The embodiments of the present disclosure enable each core network element to initiate corresponding service processes according to the UE capability, ensuring the normal operation of various service processes under the RAN servitization.

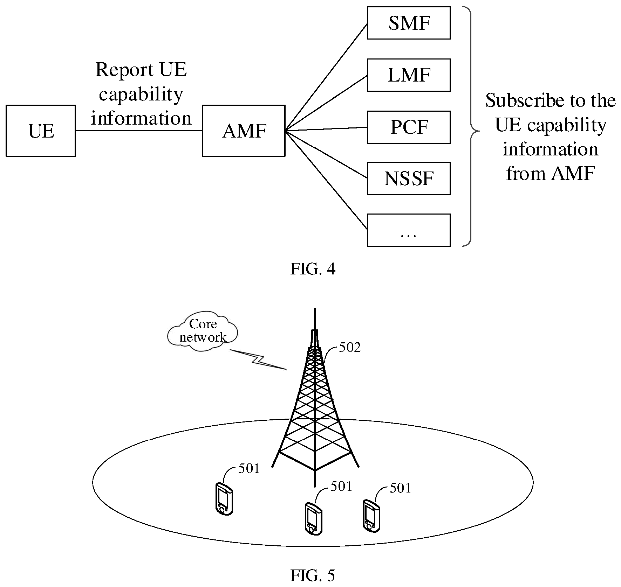

Exemplarily, FIG. 2 is a schematic diagram of managing UE capability information through a newly added access network element provided by an embodiment of the present disclosure. As shown in FIG. 2, the newly added access network element is named, for example, UE Capability Management Function (UE Capability Management Function, UECMF). The core network element, such as AMF, SMF, LMF, Policy Control Function (Policy Control Function, PCF) and Network Slice Select Function (Network Slice Select Function, NSSF), subscribes to the UE capability information from the UECMF according to the UE capability reported by the UE stored and managed by the UECMF. The embodiments of the present disclosure do not limit the deployment position of the UECMF, and the UECMF may be a service function after the RAN servitization or an independent functional module. FIG. 3 is a schematic diagram of managing UE capability information through a core network element provided by an embodiment of the present disclosure. As shown in FIG. 3, UE capability information reported by the UE is stored and managed through the core network elements that directly interact with the RAN (such as AMF, SMF, LMF, PCF, NSSF, etc.). FIG. 4 is a schematic diagram of managing UE capability information through an AMF provided by an embodiment of the present disclosure. As shown in FIG. 4, UE capability information reported by the UE is stored and managed through the AMF, and other the core network elements, such as SMF, LMF, PCF, and NSSF, subscribe to the UE capability information from the AMF.

It should be noted that the method and the apparatus provided in the embodiments of the present disclosure are based on the same application concept. Since the principles of the method and the apparatus for solving problems are similar, the implementations of the apparatus and the method may refer to each other, and repeated descriptions will not be provided herein.

Hereinafter, first, an exemplary description will be given of the application scenario of the solution provided in the present disclosure.

FIG. 5 is a schematic diagram of an application scenario provided by an embodiment of the present disclosure. As shown in FIG. 5, with reference to FIG. 2, the present embodiment is illustrated by taking the newly added access network element (i.e., UECMF) for storing and managing UE capability as an example. A UE 501 (three UEs 501 are taken as an example in FIG. 5) initiates a registration request to a base station 502 (that is, RAN), and the base station 502 sends the registration request to a core network element AMF. The AMF subscribes to the UE capability information from the access network element UECMF deployed in the base station 502, and the AMF determines a security algorithm of the UE 501 and the core network according to the subscribed UE capability information.

It should be noted that FIG. 5 is only a schematic diagram of one application scenario provided in the embodiment of the present disclosure. The embodiment of the present disclosure does not limit the devices included in FIG. 5, nor does it limit the positional relationship between the devices in FIG. 5.

Hereinafter, the technical solution of the embodiment of the present disclosure and how the technical solution of the embodiment of the present disclosure solves the above technical problems will be described in detail with specific embodiments. The following specific embodiments may be implemented independently or in combination with each other, and repeated descriptions of the same or similar concepts or processes may not be provided in some embodiments.

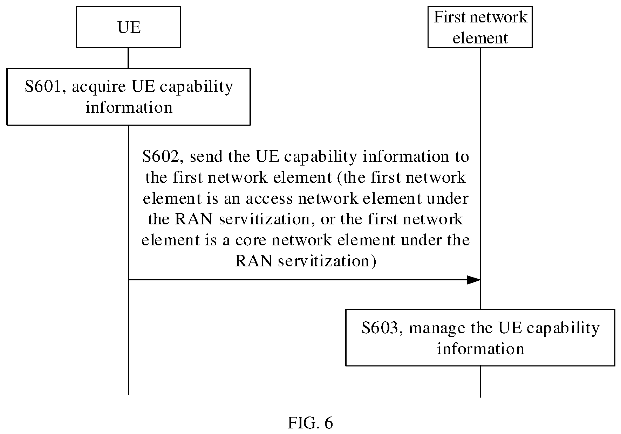

FIG. 6 is a first schematic flowchart of a UE capability management method under RAN servitization provided by an embodiment of the present disclosure. A first network element is an access network element under the RAN servitization, or the first network element is a core network element under the RAN servitization. As shown in FIG. 6, the UE capability management method under the RAN servitization of the embodiment of the present disclosure includes the following steps.

S601, the UE acquires UE capability information.

In the embodiment of the present disclosure, the UE acquires the UE capability information locally, and the UE capability information is, for example, UE capability information generated by a user's settings on the UE. Optionally, the UE capability information includes UE network capability information and UE radio capability information.

Exemplarily, the UE network capability information is, for example, the security capability information supported by the UE in the above embodiments, whether the UE supporting extended protocol configuration options, and whether the UE supporting the capability of restriction on use of enhanced coverage, etc. The UE radio capability information is, for example, UE category information used to determine transmission capability of the UE, ROCH capability information of the UE, and radio frequency capability information of the UE, etc.

Further, optionally, the UE capability information further includes at least one of the following: sensing capability information, AI capability information, or computing capability information.

It can be understood that in addition to UE network capability information and UE radio capability information, the UE capability information may also include new capability information such as sensing capability information, AI capability information, or computing capability information.

S602, the UE sends the UE capability information to the first network element.

Correspondingly, the first network element receives the UE capability information sent by the UE.

In this step, after obtaining the UE capability information, the UE may send the UE capability information to the first network element. Correspondingly, the first network element receives the UE capability information sent by the UE. Exemplarily, referring to FIG. 2, the first network element is an access network element UECMF under the RAN servitization. The UECMF receives the UE capability information sent by the UE. Referring to FIG. 3, the first network element is a core network element that directly interacts with the RAN under the RAN servitization, the core network element receives the UE capability information sent by the UE. Referring to FIG. 4, the first network element is an AMF under the RAN servitization, the AMF receives the UE capability information sent by the UE.

S603, the first network element manages the UE capability information.

Exemplarily, referring to FIG. 2, after receiving the UE capability information sent by the UE, the UECMF may manage the UE capability information, such as storing the UE capability information and sending the UE capability information to the core network element that subscribes to the UE capability.

Optionally, the UE capability information is represented in the form of a UE category, and/or the UE capability information is represented in the form of a UE network capability information element.

Exemplarily, the UE capability information may be represented in the form of the UE category (UE Category), and for a new UE capability, a corresponding UE category may be added. When the UE reports the new UE capability, the new UE capability may be carry through signaling to the first network element used to manage the UE capability. For example, Category A may be used to indicate that the UE has data processing capability, Category B may be used to indicate that the UE has sensing capability, Category C may be used to indicate that the UE has AI capability, Category D may be used to indicate that the UE has computing capability, and Category E may be used to indicate that the UE has a combination of multiple new capabilities, etc. Exemplarily, the UE capability information may be represented in the form of the UE network capability information element (UE Network Capability IE), and for a new UE capability, a corresponding UE network capability information element may be added. When the UE reports the new UE capability, the new UE capability may be carried through signaling to the first network element used to manage UE capabilities.

In the embodiment of the present disclosure, the UE acquires UE capability information by the UE and sends the UE capability information to a first network element; correspondingly, the first network element receives the UE capability information sent by the UE and manages the UE capability information. The first network element is an access network element under the RAN servitization, or the first network element is a core network element under the RAN servitization. That is, the UE capability information can be managed through the access network element under the RAN servitization, or through the core network element under the RAN servitization, instead of managing the UE capability information through AMF as in the current related art. The embodiment of the present disclosure enables that each core network element can obtain the UE capability information from the first network element, thereby initiating a corresponding service process according to the UE capability information, and ensuring the normal operation of each service process under the RAN servitization.

On the basis of the above embodiment, in some embodiments, the first network element is the access network element, a second network element is the core network element under the RAN servitization. The second network element subscribes to the UE capability information from the access network element, and the first network element managing the UE capability information may include: the first network element sending the UE capability information to the second network element. Correspondingly, the second network element receives the UE capability information sent by the first network element and manages the UE capability information.

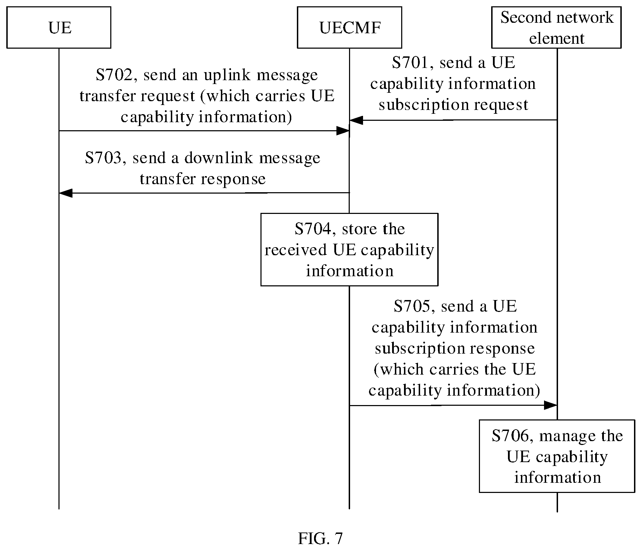

Exemplarily, taking the UE's initial access to the network as an example, FIG. 7 is a second schematic flowchart of a UE capability management method under RAN servitization provided by an embodiment of the present disclosure. As shown in FIG. 7, the first network element is an access network element UECMF, the second network element is a core network element under the RAN servitization. The second network element is, for example, AMF, SMF, LMF, etc., under the RAN servitization. The UE capability management method under the RAN servitization of the embodiment of the present disclosure may include the following steps.

S701, the second network element sends a UE capability information subscription request to the UECMF.

S702, the UE sends an uplink message transfer (UL Message Transfer) request to the UECMF, where the request carries UE capability information, and the UE capability information includes UE network capability information and UE radio capability information.

S703, the UECMF sends a downlink message transfer (DL Message Transfer) response to the UE.

S704, the UECMF stores the received UE capability information.

S705, the UECMF sends a UE capability information subscription response to the second network element, and sends the UE capability information to the second network element that subscribes to the UE capability information. Correspondingly, the second network element receives the UE capability information sent by the UECMF.

S706, the second network element manages the UE capability information.

Optionally, subscribing to the UE capability information may include subscribing to all UE capability information or subscribing to UE capability information corresponding to service requirements.

It can be understood that the second network element may subscribe to all the UE capability information from the access network element, or subscribe to the UE capability information corresponding to the service requirements from the access network element, which is not limited in the embodiment of the present disclosure. For example, assuming the second network element is an SMF, the SMF may only subscribe to UE capability information relate to session according to the service requirements; assuming the second network element is an LMF, the LMF may only subscribe to UE capability information relate to positioning according to the service requirements. Optionally, the second network element may subscribe to the UE capability information in advance (for example, subscribe when the second network element is just started) or may subscribe to the UE capability information in response to the need of the second network element, which is not limited in the embodiment of the present disclosure.

On the basis of the above embodiment, in an example, the UE capability information sent by the UE and received by the access network element includes UE network capability information. The access network element managing the UE capability information may include: the access network element sending a first enquiry request to the UE, where the first enquiry request is used to enquire UE radio capability information. Correspondingly, the UE receives the first enquiry request sent by the access network element, acquires the UE radio capability information, and sends the UE radio capability information to the access network element. Correspondingly, the access network element receives the UE radio capability information sent by the UE and manages the UE radio capability information.

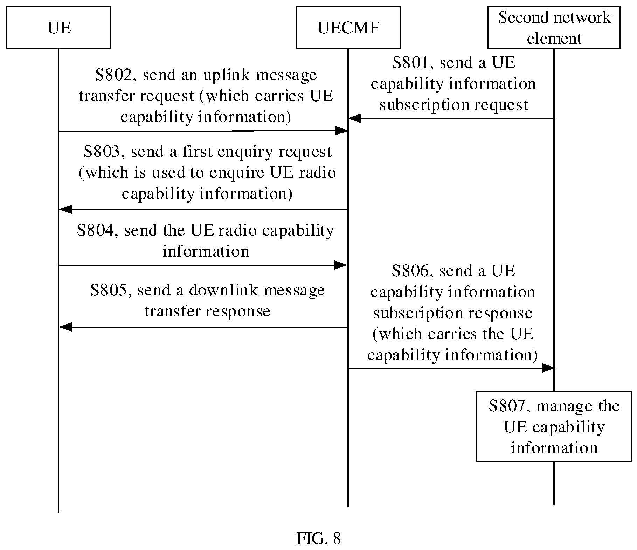

It can be understood that in this embodiment, the UE capability information sent by the UE and received by the access network element only includes the UE network capability information but does not include UE radio capability information. Exemplarily, taking the UE's initial access to the network as an example, FIG. 8 is a third schematic flowchart of a UE capability management method under RAN servitization provided by an embodiment of the present disclosure. As shown in FIG. 8, the first network element is an access network element UECMF, the second network element is a core network element under the RAN serviceification. The second network element is, for example, AMF, SMF, LMF, etc., under the RAN serviceification. The UE capability management method under the RAN serviceification of the embodiment of the present disclosure may include the following steps.

S801, the second network element sends a UE capability information subscription request to the UECMF.

S802, the UE sends an uplink message transfer request to the UECMF, where the request carries UE network capability information.

S803, the UECMF determines that the request does not include UE radio capability information, and sends a first enquiry request to the UE, where the first enquiry request is used to enquire the UE radio capability information.

S804, the UE sends the UE radio capability information to the UECMF. Correspondingly, the UECMF receives the UE radio capability information sent by the UE.

S805, the UECMF sends a downlink message transfer response to the UE.

S806, the UECMF sends a UE capability information subscription response to the second network element, and sends the UE capability information to the second network element that subscribes to the UE capability information. Correspondingly, the second network element receives the UE capability information sent by the UECMF.

S807, the second network element manages the UE capability information.

Based on the embodiment shown in FIG. 8, it can be understood that when the UE initially accesses the network, the UE capability information may be reported in a one-time reporting manner, or may be reported in a multiple-time reporting manner.

On the basis of the above embodiment, in another example, the UE capability information sent by the UE and received by the access network element includes UE radio capability information. The access network element managing the UE capability information may include: the access network element sending a second enquiry request to the UE, where the second enquiry request is used to enquire UE network capability information. Correspondingly, the UE receives the first enquiry request sent by the access network element, acquires the UE network capability information, and sends the UE radio capability information to the access network element. Correspondingly, the access network element receives the UE network capability information sent by the UE and manages the UE network capability information.

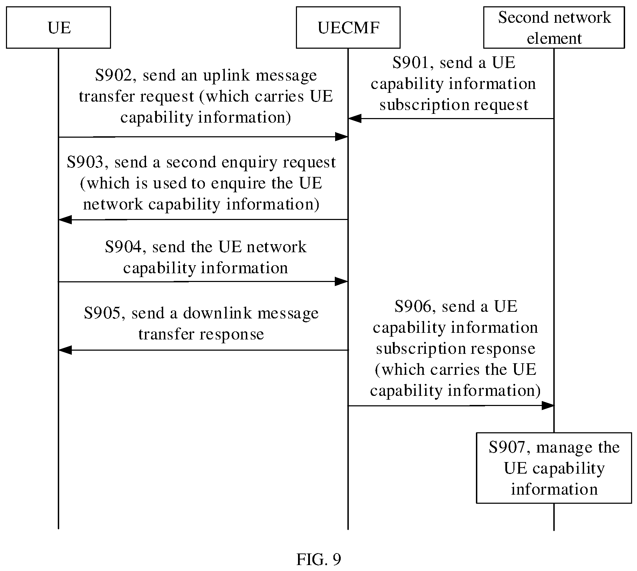

It can be understood that in this embodiment, the UE capability information sent by the UE and received by the access network element only includes the UE radio capability information but does not include UE network capability information. Exemplarily, taking the UE's initial access to the network as an example, FIG. 9 is a fourth schematic flowchart of a UE capability management method under RAN servitization provided by an embodiment of the present disclosure. As shown in FIG. 9, the first network element is an access network element UECMF, the second network element is a core network element under RAN servitization. The second network element is, for example, AMF, SMF, LMF, etc., under the RAN servitization. The UE capability management method under the RAN servitization of the embodiment of the present disclosure may include the following steps.

S901, the second network element sends a UE capability information subscription request to the UECMF.

S902, the UE sends an uplink message transfer request to the UECMF, where the request carries UE radio capability information.

S903, the UECMF determines that the request does not include UE network capability information, and sends a second enquiry request to the UE, where the second enquiry request is used to enquire the UE network capability information.

S904, the UE sends the UE network capability information to the UECMF. Correspondingly, the UECMF receives the UE network capability information sent by the UE.

S905, the UECMF sends a downlink message transfer response to the UE.

S906, the UECMF sends a UE capability information subscription response to the second network element, and sends the UE capability information to the second network element that subscribes to the UE capability information. Correspondingly, the second network element receives the UE capability information sent by the UECMF.

S907, the second network element manages the UE capability information.

On the basis of the above embodiment, optionally, the access network element managing the UE capability information may include: if the access network element determines that a service scope for the UE is not satisfied, transmitting the UE capability information to a corresponding updated access network element; sending a first notification message to the second network element, where the first notification message is used to notify the second network element to subscribe to the UE capability information from the updated access network element, and the first notification message carries network element information corresponding to the updated access network element; and receiving a first unsubscription request sent by the second network element, where the first unsubscription request is used to instruct the second network element to stop subscribing to the UE capability information from an access network element before update.

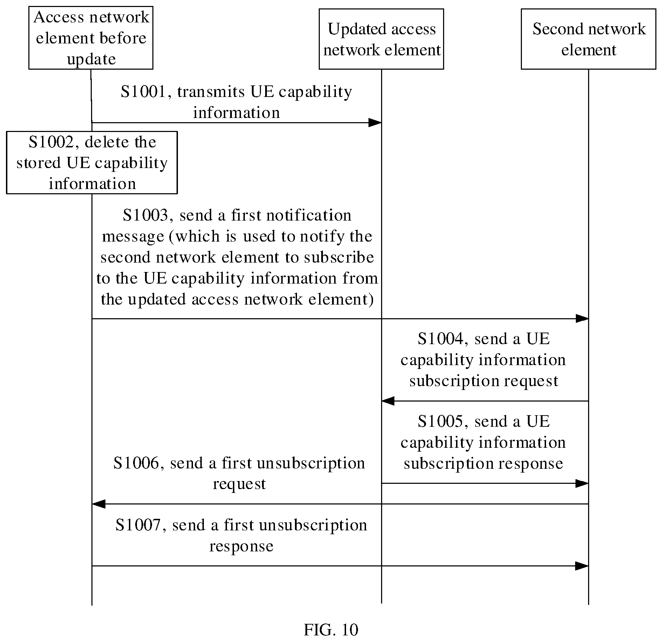

It can be understood that when the network element managing the UE capability information changes, the UE capability information needs to be transmitted between network elements. For example, the UE capability information is transferred between the access network element UECMF before update and the updated access network element UECMF. Exemplarily, FIG. 10 is a fifth schematic flowchart of a UE capability management method under RAN servitization provided by an embodiment of the present disclosure. As shown in FIG. 10, the UE capability management method under the RAN servitization of the embodiment of the present disclosure includes the following steps.

S1001, the access network element before update determines that the service scope for the UE is not satisfied, and transmits UE capability information to the corresponding updated access network element. Correspondingly, the updated access network element stores the received UE capability information.

In this step, the access network element before update is an original access network element serving the UE. Due to the UE's movement or the load of the second network element, the original access network element serving the UE changes, and the updated access network element is used. The access network element before update and the updated access network element are network elements of the same type.

S1002, the access network element before update deletes the stored UE capability information.

S1003, the access network element before update sends a first notification message to the second network element, where the first notification message is used to notify the second network element to subscribe to the UE capability information from the updated access network element, and the first notification message carries network element information corresponding to the updated access network element.

S1004, the second network element sends a UE capability information subscription request to the updated access network element.

S1005, the updated access network element sends a UE capability information subscription response to the second network element.

S1006, the second network element sends a first unsubscription request to the access network element before update, where the first unsubscription request is used to instruct the second network element to stop subscribing to the UE capability information from the access network element before update.

S1007, the access network element before update sends a first unsubscription response to the second network element.

On the basis of the above embodiment, in some embodiments, the first network element is a core network element under the RAN servitization, and the core network element may manage the UE capability information.

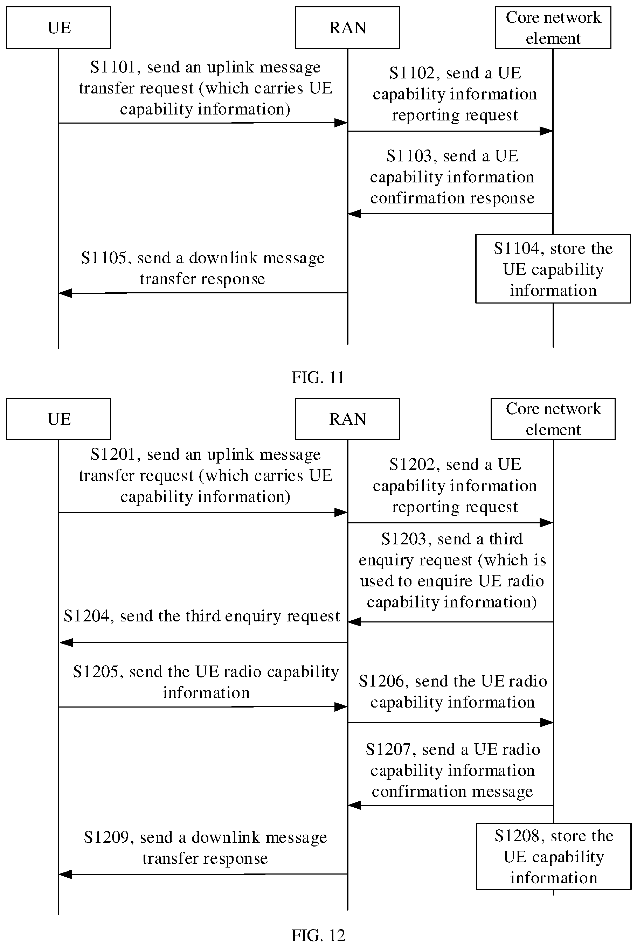

Exemplarily, taking the UE's initial access to the network as an example, FIG. 11 is a sixth schematic flowchart of a UE capability management method under RAN servitization provided by an embodiment of the present disclosure. As shown in FIG. 11, the first network element is a core network element under the RAN servitization. The core network element is, for example, AMF, SMF, LMF, etc., under RAN servitization. The UE capability management method under the RAN servitization of the embodiment of the present disclosure may include the following steps.

S1101, the UE sends an uplink message transfer request to the RAN, where the request carries UE capability information, and the UE capability information includes UE network capability information and UE radio capability information.

In this step, assuming the first network element is an AMF, the request may be a registration request sent from the UE to the AMF; assuming the first network element is an SMF, the request may be a session establishment request sent from the UE to the SMF; assuming the first network element is an LMF, the request may be a positioning request sent from the UE to the LMF.

S1102, the RAN carries the UE capability information to the corresponding core network element by invoking a servitization operation with the core network element, that is, the RAN sends a UE capability information reporting request to the core network element.

S1103, the core network element determines that the UE capability information has been received by invoking the servitization operation with the RAN, that is, the core network element sends a UE capability information confirmation response to the RAN.

S1104, the core network element stores the received UE capability information.

S1105, the RAN sends a downlink message transfer response to the UE.

It should be noted that when the first network element is the core network element under the RAN servitization, the core network element may manage all UE capability information or UE capability information corresponding to service requirements, which is not limited in the embodiment of the present disclosure.

On the basis of the above embodiment, in some embodiments, the first network element is the core network element, and the UE capability information sent by the UE and received by the core network element includes UE network capability information. The first network element managing the UE capability information may include: the core network element sending a third enquiry request to the UE, where the third enquiry request is used to enquire UE radio capability information. Correspondingly, the UE receives the third enquiry request sent by the core network element, acquires the UE radio capability information, and sends the UE radio capability information to the core network element. Correspondingly, the core network element receives the UE radio capability information sent by the UE and manages the UE radio capability information.

It can be understood that in this embodiment, the UE capability information sent by the UE and received by the access network element only includes the UE network capability information but does not include UE radio capability information. Exemplarily, taking the UE's initial access to the network as an example, FIG. 12 is a seventh schematic flowchart of a UE capability management method under RAN servitization provided by an embodiment of the present disclosure. As shown in FIG. 12, the first network element is a core network element. The core network element is, for example, AMF, SMF, LMF, etc., under the RAN servitization. The UE capability management method under the RAN servitization of the embodiment of the present disclosure may include the following steps.

S1201, the UE sends an uplink message transfer request to the RAN, where the request carries UE network capability information.

In this step, assuming the first network element is an AMF, the request may be a registration request sent from the UE to the AMF; assuming the first network element is an SMF, the request may be a session establishment request sent from the UE to the SMF; assuming the first network element is an LMF, the request may be a positioning request sent from the UE to the LMF.

S1202, the RAN carries the UE capability information to the corresponding core network element by invoking a servitization operation with the core network element, that is, the RAN sends a UE capability information reporting request to the core network element.

S1203, the core network element invokes the servitization operation with the RAN, and sends a third enquiry request to the RAN, where the third enquiry request is used to enquire UE radio capability information.

S1204, the RAN sends the third enquiry request to the UE.

S1205, the UE sends the UE radio capability information to the RAN.

S1206, the RAN sends the UE radio capability information to the core network element by invoking the servitization operation with the core network element.

S1207, the core network element invokes a servitization operation with the RAN, and sends a UE radio capability information confirmation message to the RAN.

S1208, the core network element stores the received UE radio capability information.

S1209, the RAN sends a downlink message transfer response to the UE.

On the basis of the above embodiment, optionally, the core network element managing the UE capability information may include: if the core network element determines that the service scope for the UE is not satisfied, transmitting the UE capability information to a corresponding updated core network element.

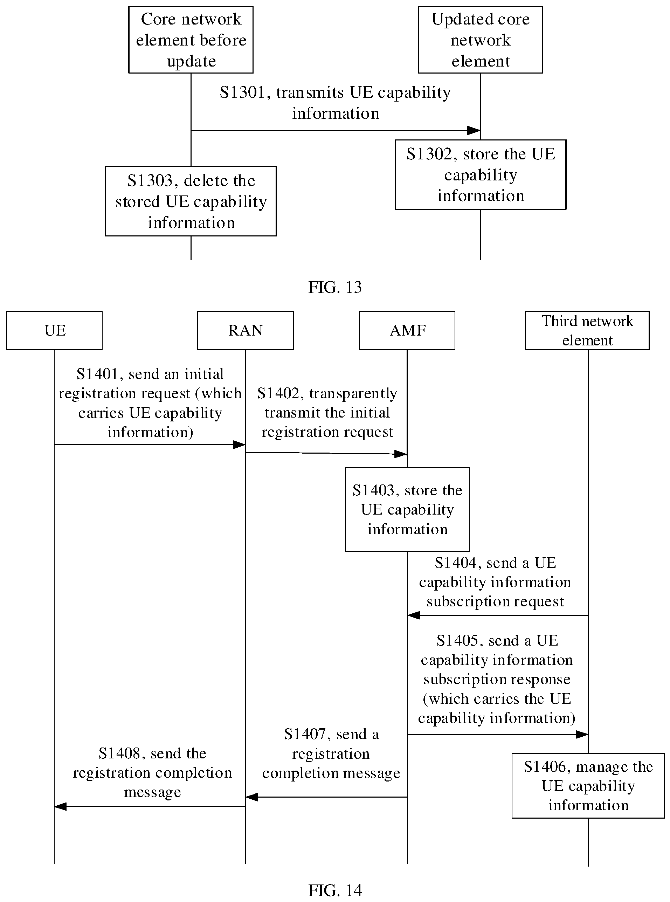

It can be understood that when the core network element managing the UE capability information changes, the UE capability information is transferred between a core network element before update and the updated core network element. Exemplarily, FIG. 13 is an eighth schematic flowchart of a UE capability management method under RAN servitization provided by an embodiment of the present disclosure. As shown in FIG. 13, the UE capability management method under the RAN servitization of the embodiment of the present disclosure includes the following steps.

S1301, the core network element before update determines that a service scope for the UE is not satisfied, and transmits UE capability information to the corresponding updated core network element.

In this step, the core network element before update is an original core network element serving the UE, and the core network element before update and the updated core network element are network elements of the same type.

S1302, the updated core network element stores the received UE capability information.

S1303, the core network element before update deletes the stored UE capability information.

On the basis of the above embodiment, in some embodiments, the first network element is an AMF in core network element. The third network element is a non-AMF network element in core network element. The third network element subscribes to the UE capability information from the AMF, and the first network element managing the UE capability information may include: the first network element sending the UE capability information to the third network element. Correspondingly, the third network element receives the UE capability information sent by the first network element and manages the UE capability information.

This embodiment is under the RAN servitization architecture, where the AMF still manages the UE capability information, but the non-AMF network element in the core network element subscribes to the UE capability information from the AMF. Exemplarily, taking the UE's initial access to the network as an example, FIG. 14 is a ninth schematic flowchart of a UE capability management method under RAN servitization provided by an embodiment of the present disclosure. As shown in FIG. 14, the first network element is an AMF in core network element. The third network element is a non-AMF network element in the core network element, and the third network element is, for example, SMF, LMF, etc., under the RAN servitization. The UE capability management method under the RAN servitization of the embodiment of the present disclosure may include the following steps.

S1401, the UE sends an initial registration request to the RAN, where the request carries UE capability information, and the UE capability information includes UE network capability information and UE radio capability information.

S1402, the RAN transparently transmits the initial registration request to the AMF.

S1403, the AMF stores the UE capability information reported by the UE.

S1404, the third network element sends a UE capability information subscription request to the AMF.

S1405, the AMF sends a UE capability information subscription response to the third network element, and sends the UE capability information to the third network element that subscribes to the UE capability information. Correspondingly, the third network element receives the UE capability information sent by the AMF.

S1406, the third network element manages the UE capability information.

S1407, the AMF sends a registration completion message to the RAN.

S1408, the RAN sends the registration completion message to the UE.

It should be noted that the embodiment of the present disclosure does not limit the execution order of steps S1407, S1408 and steps S1403 to S1406, that is, steps S1407 and S1408 may be executed first, and then steps S1403 to S1406 may be executed. In addition, the third network element may subscribe to all UE capability information from the AMF, or subscribe to UE capability information corresponding to service requirements from the AMF, which is not limited in the embodiment of the present disclosure. Optionally, the third network element may subscribe to the UE capability information in advance (for example, subscribe when the third network element is just started) or may subscribe to the UE capability information in response to the need of the third network element, which is not limited in the embodiment of the present disclosure.

On the basis of the above embodiment, optionally, the UE capability information sent by the UE and received by the AMF includes UE network capability information, and the AMF managing the UE capability information may include: sending an initial context setup request message to an access network, where the request message does not carry UE radio capability information. The access network sends a fourth enquiry request to the UE, where the fourth enquiry request is used to enquire UE radio capability information. The UE acquires the UE radio capability information and sends the UE radio capability information to the access network. The access network sends the UE radio capability information to the AMF. The AMF receives the UE radio capability information sent by the access network.

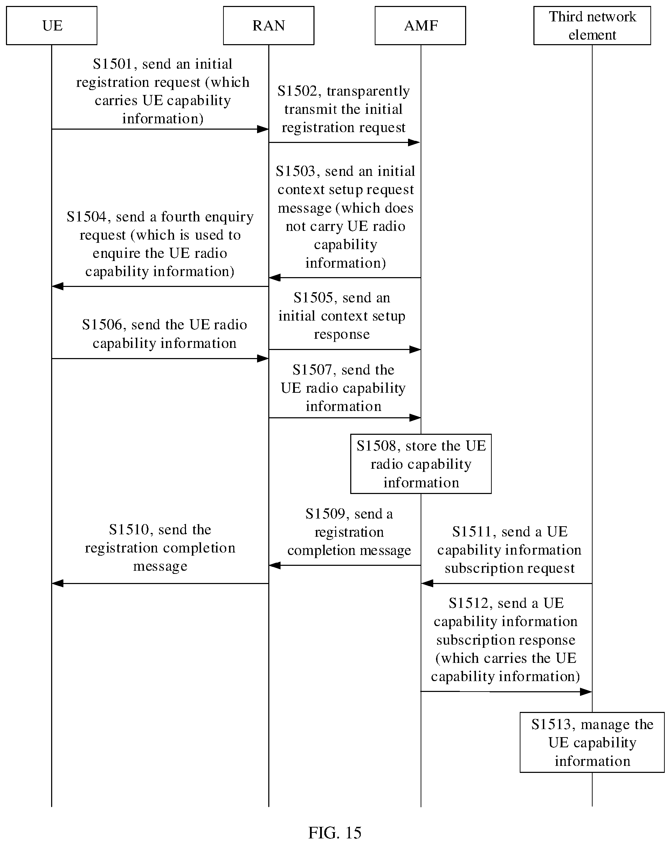

It can be understood that in this embodiment, the UE capability information sent by the UE and received by the AMF only includes the UE network capability information but does not include UE radio capability information. Exemplarily, taking the UE's initial access to the network as an example, FIG. 15 is a tenth schematic flowchart of a UE capability management method under RAN servitization provided by an embodiment of the present disclosure. As shown in FIG. 15, the first network element is an AMF in the core network element. The third network element is a non-AMF network element in the core network element, and the third network element is, for example, SMF, LMF, etc., under the RAN servitization. The UE capability management method under the RAN servitization of the embodiment of the present disclosure may include the following steps.

S1501, the UE sends an initial registration request to the RAN, where the request carries UE network information.

S1502, the RAN transparently transmits the initial registration request to the AMF.

S1503, the AMF sends an initial context setup request message to the RAN, where the request message does not carry UE radio capability information.

S1504, the RAN sends a fourth enquiry request to the UE, where the fourth enquiry request is used to enquire the UE radio capability information.

S1505, the RAN sends an initial context setup response to the AMF.

S1506, the UE sends the UE radio capability information to the RAN.

S1507, the RAN sends the UE radio capability information to the AMF, and correspondingly, the AMF receives the UE radio capability information.

S1508, the AMF stores the UE radio capability information.

S1509, the AMF sends a registration completion message to the RAN.

S1510, the RAN sends a registration completion message to the UE.

S1511, the third network element sends a UE capability information subscription request to the AMF.

S1512, the AMF sends a UE capability information subscription response to the third network element, and sends the UE capability information to the third network element that subscribes to the UE capability information. Correspondingly, the third network element receives the UE capability information sent by the AMF.

S1513, the third network element manages the UE capability information.

It should be noted that the embodiment of the present disclosure does not limit the execution order of step S1511 and steps S1501 to S1510.

On the basis of the above embodiment, optionally, the AMF managing the UE capability information may include: if the AMF determines that the service scope for the UE is not satisfied, transmitting the UE capability information to a corresponding updated AMF; sending a second notification message to the third network element, where the second notification message is used to notify the third network element to subscribe to the UE capability information from the updated AMF, and the second notification message carries network element information corresponding to the updated AMF; and receiving a second unsubscription request sent by the third network element, where the second unsubscription request is used to instruct the third network element to stop subscribing to UE capability information from the AMF before update.

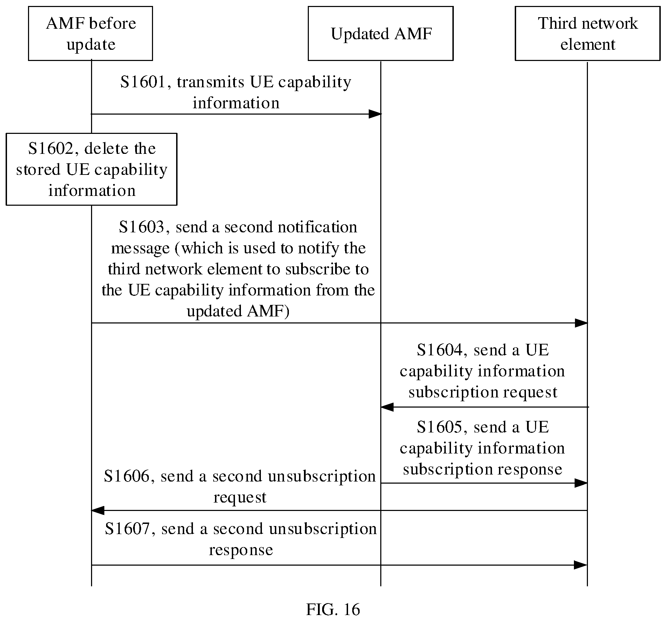

It can be understood that when the AMF managing the UE capability information changes, the UE capability information needs to be transmitted between AMFs, for example, the UE capability information is transferred between the AMF before update and the updated AMF. Exemplarily, FIG. 16 is an eleventh schematic flowchart of a UE capability management method under RAN servitization provided by an embodiment of the present disclosure. As shown in FIG. 16, the UE capability management method under the RAN servitization of the embodiment of the present disclosure includes the following steps.

S1601, the AMF before update determines that a service scope for the UE is not satisfied, and transmits UE capability information to the corresponding updated AMF. Correspondingly, the updated AMF stores the received UE capability information.

In this step, the AMF before update is an original AMF serving the UE, and the AMF before update and the updated AMF are network elements of the same type.

S1602, the AMF before update deletes the stored UE capability information.

S1603, the AMF before update sends a second notification message to the third network element, where the second notification message is used to notify the third network element to subscribe to the UE capability information from the updated AMF, and the second notification message carries network element information corresponding to the updated AMF.

S1604, the third network element sends a UE capability information subscription request to the updated AMF.

S1605, the updated AMF sends a UE capability information subscription response to the third network element.

S1606, the third network element sends a second unsubscription request to the AMF before update, where the second unsubscription request is used to instruct the third network element to stop subscribing to the UE capability information from the AMF before update.

S1607, the AMF before update sends a second unsubscription response to the third network element.

On the basis of the above embodiment, for a case where the UE capability information is updated, in a possible implementation manner, if the UE determines that the UE capability information changes and the UE is in an idle state, the UE acquires updated UE capability information; and sends the updated UE capability information to the first network element. Correspondingly, the UE capability information received by the first network element may include the updated UE capability information.

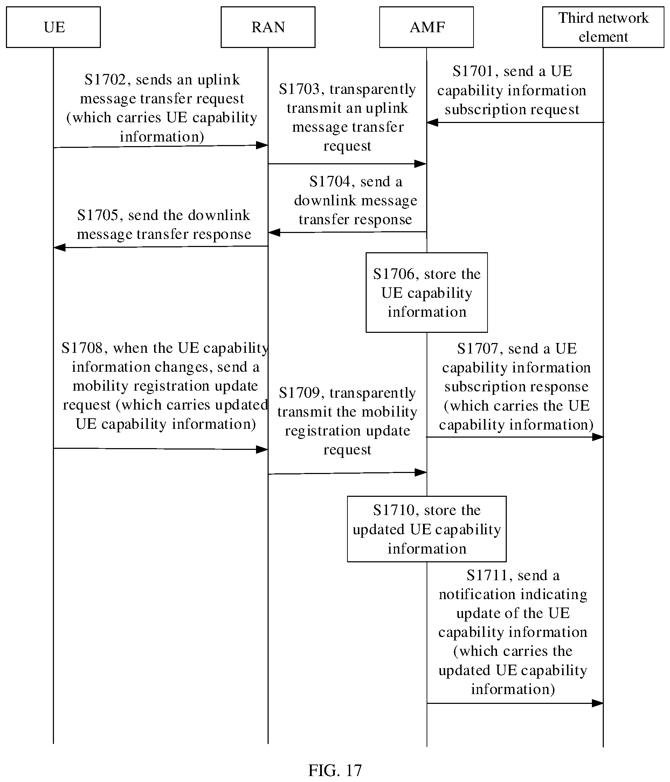

In an example, for a case where the first network element is an AMF in core network element and the third network element is a non-AMF network element in core network element, FIG. 17 is a twelfth schematic flowchart of a UE capability management method under RAN servitization provided by an embodiment of the present disclosure. As shown in FIG. 17, the UE capability management method under the RAN servitization of the embodiment of the present disclosure includes the following steps.

S1701, the third network element sends a UE capability information subscription request to the AMF.

S1702, the UE sends an uplink message transfer request to the RAN, where the request carries UE capability information, and the UE capability information includes UE network capability information and UE radio capability information.

S1703, the RAN transparently transmits the uplink message transfer request to the AMF.

S1704, the AMF sends a downlink message transfer response to the RAN.

S1705, the RAN sends the downlink message transfer response to the UE.

S1706, the AMF stores the UE capability information reported by the UE.

S1707, the AMF sends a UE capability information subscription response to the third network element, and sends the UE capability information to the third network element that subscribes to the UE capability information. Correspondingly, the third network element receives the UE capability information sent by the AMF.

S1708, when the UE capability information changes, the UE initiates a mobility registration update procedure, that is, the UE sends a mobility registration update request to the RAN, where the request carries updated UE capability information to report the updated UE capability information to the AMF.

S1709, the RAN transparently transmits the mobility registration update request to the AMF.

S1710, the AMF stores the updated UE capability information.

S1711, the AMF sends a notification indicating update of the UE capability information to the third network element that subscribes to the UE capability information, where the notification carries the updated UE capability information. Correspondingly, the third network element receives the notification sent by the AMF.

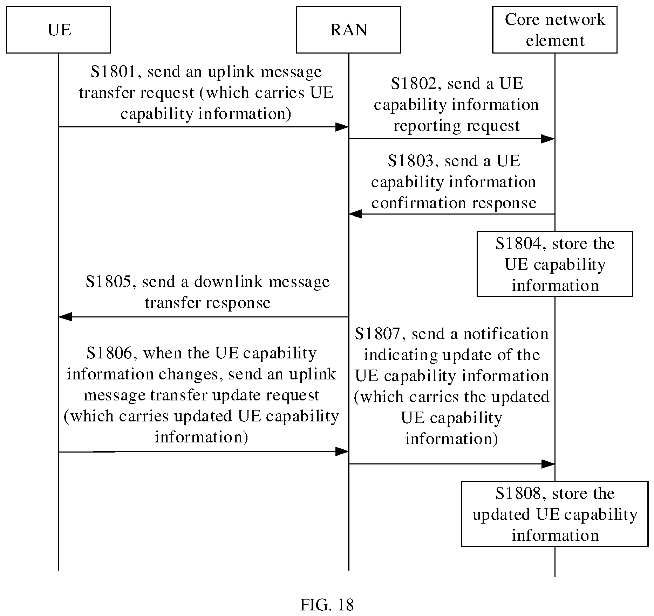

In another example, for a case where the first network element is a core network element under RAN servitization, FIG. 18 is a thirteenth schematic flowchart of a UE capability management method under RAN servitization provided by an embodiment of the present disclosure. As shown in FIG. 18, the UE capability management method under the RAN servitization of the embodiment of the present disclosure includes the following steps.

S1801, the UE sends an uplink message transfer request to the RAN, where the request carries UE capability information, and the UE capability information includes UE network capability information and UE radio capability information.

S1802, the RAN carries the UE capability information to the corresponding core network element by invoking a servitization operation with the core network element, that is, the RAN sends a UE capability information reporting request to the core network element.

S1803, the core network element determines that the UE capability information has been received by invoking the servitization operation with the RAN, that is, the core network element sends a UE capability information confirmation response to the RAN.

S1804, the core network element stores the received UE capability information.

S1805, the RAN sends the downlink message transfer response to the UE.

S1806, when the UE capability information changes, the UE sends an uplink message transfer update request to the RAN, where the request carries updated UE capability information.

S1807, the RAN sends a notification indicating update of the UE capability information to the core network element by invoking a servitization operation with the core network element, where the notification carries the updated UE capability information. Correspondingly, the core network element receives the notification sent by the RAN.

S1808, the core network element stores the updated UE capability information.

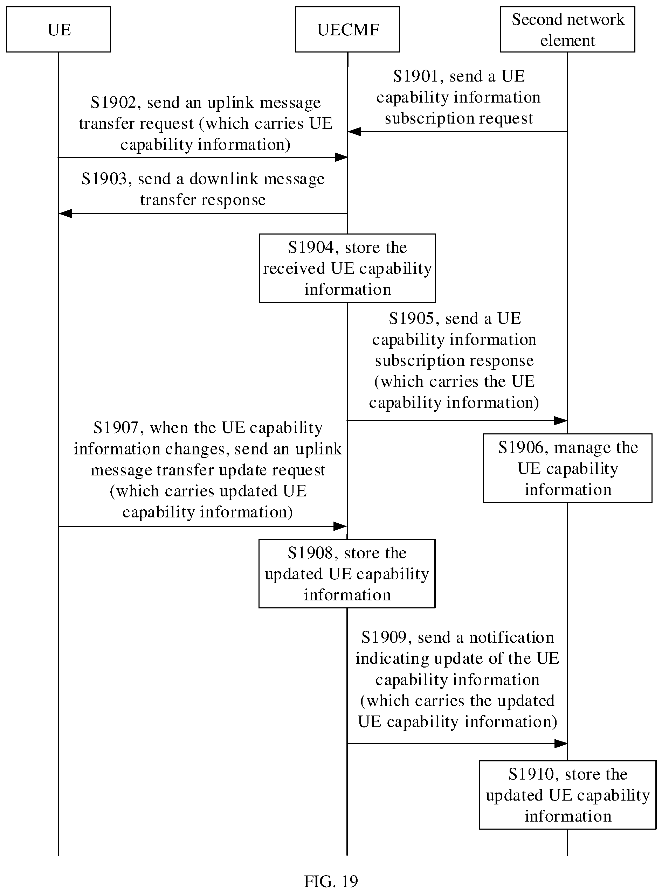

In yet another example, for a case where the first network element is an access network element UECMF and the second network element is a core network element under RAN servitization, FIG. 19 is a fourteenth schematic flowchart of a UE capability management method under RAN servitization provided by an embodiment of the present disclosure. As shown in FIG. 19, the UE capability management method under the RAN servitization of the embodiment of the present disclosure includes the following steps.

S1901, the second network element sends a UE capability information subscription request to the UECMF.

S1902, the UE sends an uplink message transfer request to the UECMF, where the request carries UE capability information, and the UE capability information includes UE network capability information and UE radio capability information.

S1903, the UECMF sends a downlink message transfer response to the UE.

S1904, the UECMF stores the received UE capability information.

S1905, the UECMF sends a UE capability information subscription response to the second network element, and sends the UE capability information to the second network element that subscribes to the UE capability information. Correspondingly, the second network element receives the UE capability information sent by the UECMF.

S1906, the second network element manages the UE capability information.

S1907, when the UE capability information changes, the UE sends an uplink message transfer update request to the UECMF, where the request carries updated UE capability information.

S1908, the core network element stores the updated UE capability information.

S1909, the UECMF sends a notification indicating update of the UE capability information to the second network element, where the notification carries the updated UE capability information. Correspondingly, the second network element receives the notification sent by the UECMF.

S1910, the second network element stores the updated UE capability information.

On the basis of the above embodiment, for the case where the UE capability information is updated, in another possible implementation manner, if the UE determines that the UE capability information changes and the UE is in a connected state, the UE adjusts its state from the connected state to an idle state; acquires updated UE capability information; and sends the updated UE capability information to the first network element.

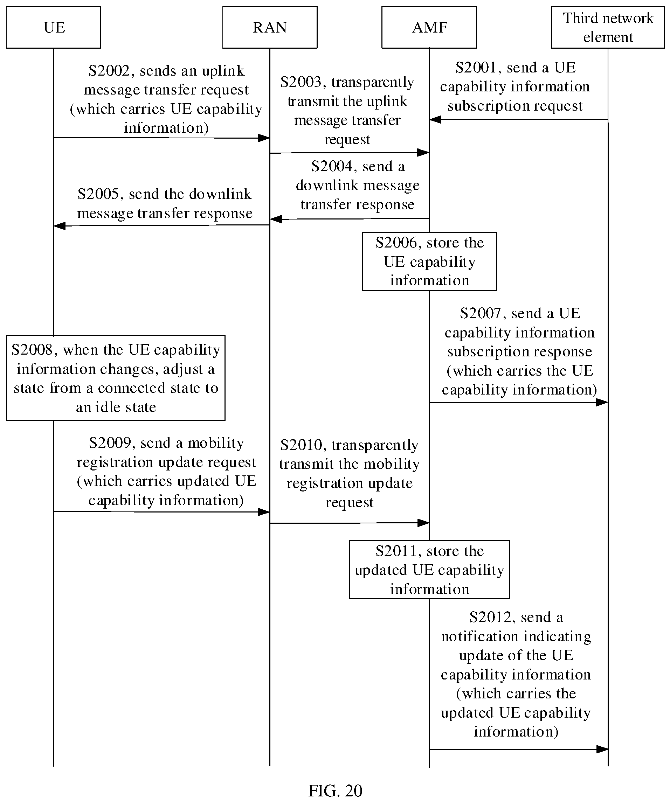

In an example, for a case where the first network element is an AMF in core network element and the third network element is a non-AMF network element in core network element, FIG. 20 is a fifteenth schematic flowchart of a UE capability management method under RAN servitization provided by an embodiment of the present disclosure. As shown in FIG. 20, the UE capability management method under the RAN servitization of the embodiment of the present disclosure includes the following steps.

S2001, the third network element sends a UE capability information subscription request to the AMF.

S2002, the UE sends an uplink message transfer request to the RAN, where the request carries UE capability information, and the UE capability information includes UE network capability information and UE radio capability information.

S2003, the RAN transparently transmits the uplink message transfer request to the AMF.

S2004, the AMF sends a downlink message transfer response to the RAN.

S2005, the RAN sends the downlink message transfer response to the UE.

S2006, the AMF stores the UE capability information reported by the UE.

S2007, the AMF sends a UE capability information subscription response to the third network element, and sends the UE capability information to the third network element that subscribes to the UE capability information. Correspondingly, the third network element receives the UE capability information sent by the AMF.

S2008, when the UE capability information changes, the UE adjusts a state from a connected state to an idle state.

S2009, the UE initiates a mobility registration update procedure, that is, the UE sends a mobility registration update request to the RAN, where the request carries updated UE capability information to report the updated UE capability information to the AMF.

S2010, the RAN transparently transmits the mobility registration update request to the AMF.

S2011, the AMF stores the updated UE capability information.

S2012, the AMF sends a notification indicating update of the UE capability information to the third network element that subscribes to the UE capability information, where the notification carries the updated UE capability information. Correspondingly, the third network element receives the notification sent by the AMF.

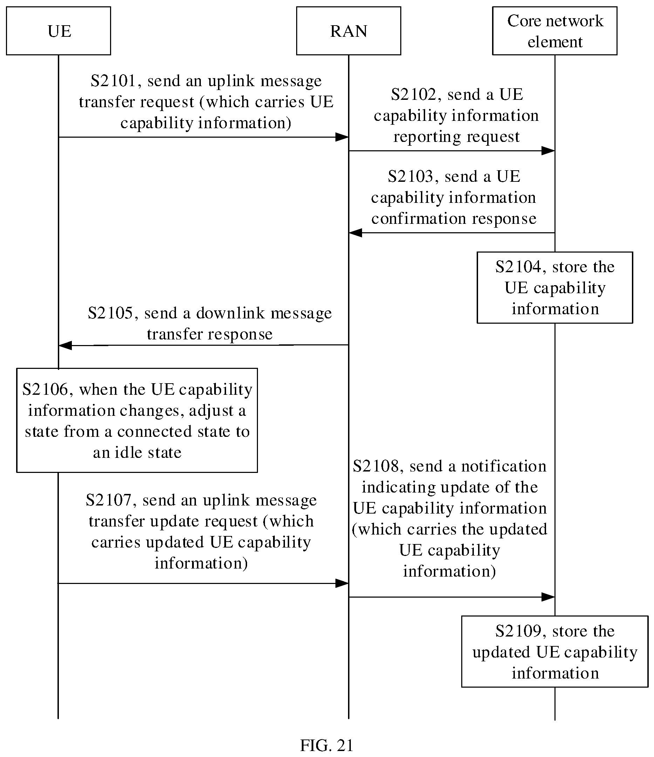

In another example, for a case where the first network element is a core network element under RAN servitization, FIG. 21 is a sixteenth schematic flowchart of a UE capability management method under RAN servitization provided by an embodiment of the present disclosure. As shown in FIG. 21, the UE capability management method under the RAN servitization of the embodiment of the present disclosure includes the following step.

S2101, the UE sends an uplink message transfer request to the RAN, where the request carries UE capability information, and the UE capability information includes UE network capability information and UE radio capability information.

S2102, the RAN carries the UE capability information to the corresponding core network element by invoking a servitization operation with the core network element, that is, the RAN sends a UE capability information reporting request to the core network element.

S2103, the core network element determines that the UE capability information has been received by invoking the servitization operation with the RAN, that is, the core network element sends a UE capability information confirmation response to the RAN.

S2104, the core network element stores the received UE capability information.

S2105, the RAN sends a downlink message transfer response to the UE.

S2106, when the UE capability information changes, the UE adjusts a state from a connected state to an idle state.

S2107, the UE sends an uplink message transfer update request to the RAN, where the request carries updated UE capability information.

S2108, the RAN sends a notification indicating update of the UE capability information to the core network element by invoking a servitization operation with the core network element, where the notification carries the updated UE capability information. Correspondingly, the core network element receives the notification sent by the RAN.

S2109, the core network element stores the updated UE capability information.

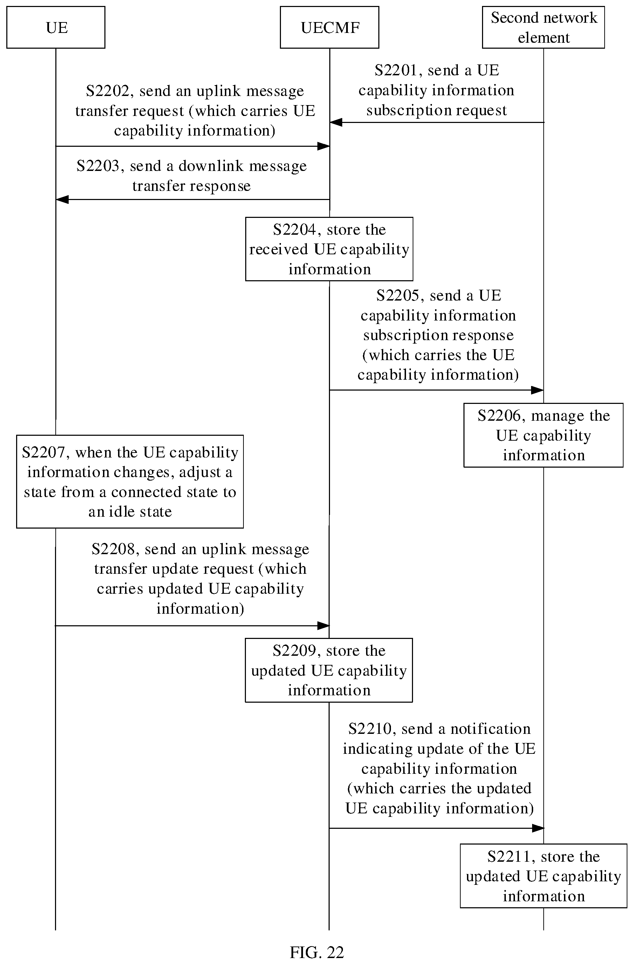

In yet another example, for a case where the first network element is an access network element UECMF and the second network element is a core network element under RAN servitization, FIG. 22 is a seventeenth schematic flowchart of a UE capability management method under RAN servitization provided by an embodiment of the present disclosure. As shown in FIG. 22, the UE capability management method under the RAN servitization of the embodiment of the present disclosure includes the following step.

S2201, the second network element sends a UE capability information subscription request to the UECMF.

S2202, the UE sends an uplink message transfer request to the UECMF, where the request carries UE capability information, and the UE capability information includes UE network capability information and UE radio capability information.

S2203, the UECMF sends a downlink message transfer response to the UE.

S2204, the UECMF stores the received UE capability information.

S2205, the UECMF sends a UE capability information subscription response to the second network element, and sends the UE capability information to the second network element that subscribes to the UE capability information. Correspondingly, the second network element receives the UE capability information sent by the UECMF.

S2206, the second network element manages the UE capability information.

S2207, when the UE capability information changes, the UE adjusts a state from a connected state to an idle state.

S2208, the UE sends an uplink message transfer update request to the UECMF, where the request carries updated UE capability information.

S2209, the core network element stores the updated UE capability information.

S2210, the UECMF sends a UE capability information subscription notification to the second network element, where the notification carries the updated UE capability information. Correspondingly, the second network element receives the notification sent by the UECMF.

S2211, the second network element stores the updated UE capability information.

On the basis of the above embodiment, optionally, if the UE determines that it is in a deregistered state, the UE sends UE state information to the first network element, where the UE state information is used to indicate that the UE is in the deregistered state. Correspondingly, the first network element receives the UE state information sent by the UE, and deletes the UE capability information corresponding to the UE.

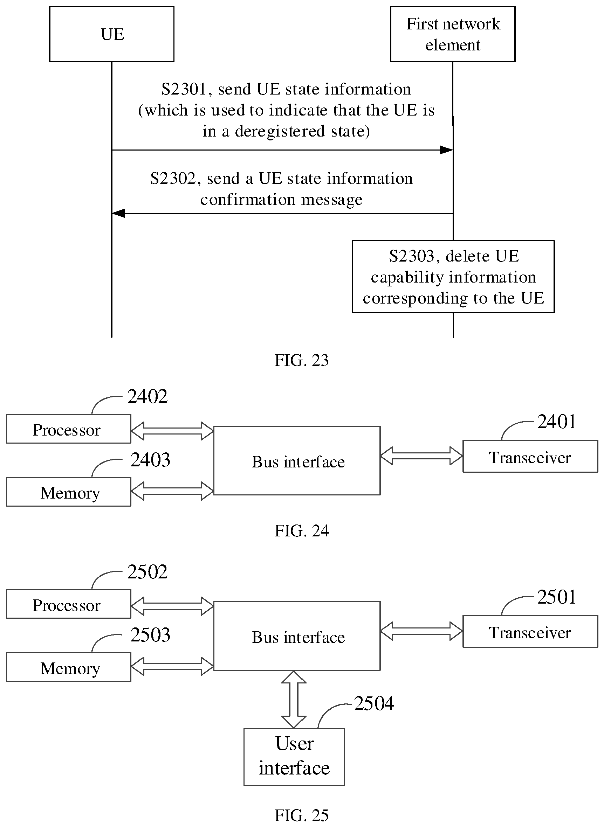

This embodiment is directed to a node managing UE capability information, which deletes the stored UE capability information when determining that the UE is in a Register Management-DEREGISTERED (Register Management-DEREGISTERED, RM-DEREGISTERED) state. For example, network elements such as AMF, SMF, LMF, or UECMF need to delete the UE capability information stored by themselves when perceiving that the UE is in the RM-DEREGISTERED state. Exemplarily, FIG. 23 is an eighteenth schematic flowchart of a UE capability management method under RAN servitization provided by an embodiment of the present disclosure. As shown in FIG. 23, the UE capability management method under the RAN servitization of the embodiment of the present disclosure includes the following step.

S2301, the UE determines that it is in a deregistered state, and sends UE state information to the first network element, where the UE state information is used to indicate that the UE is in the deregistered state. Correspondingly, the first network element receives the UE state information sent by the UE.

S2302, the first network element sends a UE state information confirmation message to the UE.

S2303, the first network element deletes the UE capability information corresponding to the UE.

FIG. 24 is a first schematic structural diagram of a UE capability management apparatus under RAN servitization provided by an embodiment of the present disclosure, which is applied to a first network element. The first network element is an access network element under the RAN servitization, or the first network element is a core network element under the RAN servitization. As shown in FIG. 24, the UE capability management apparatus under RAN servitization may include a transceiver 2401, a processor 2402, and a memory 2403.

The transceiver 2401 is configured to receive and send data under control of the processor 2402.

In FIG. 24, a bus architecture may include any number of interconnected buses and bridges. Specifically, one or more processors represented by processor 2402 and various circuits of memory represented by memory 2403 are linked together. The bus architecture may also link various other circuits, such as peripheral devices, voltage regulators and power management circuits, which are well known in the art, so they will not be further described here. The bus interface provides the interface. The transceiver 2401 may be a plurality of components, that is, including a transmitting end and a receiving end, and provides a unit for communicating with various other apparatuses over transmission media, where the transmission media include wireless channels, wired channels, optical cables, and other transmission media. The processor 2402 is responsible for managing the bus architecture and general processing, and the memory 2403 may store data used by the processor 2402 when performing operations.

Optionally, The processor 2402 may be a central processing unit (CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor 2402 may also adopt a multi-core architecture.

The processor 2402, by invoking the computer program stored in the memory 2403, is configured to execute any UE capability management method related to the first network element provided by the embodiment of the present disclosure in accordance with the obtained executable instructions. The processor 2402 and the memory 2403 may also be physically arranged separately.

Specifically, when the processor 2402 executes the computer program stored in the memory 2403, the processor 2402 implements the following operations: receiving UE capability information sent by a UE; and managing the UE capability information.

Optionally, the first network element is the access network element, a second network element is the core network element, the second network element subscribes to the UE capability information from the access network element, and in the process of managing the UE capability information, the processor 2402 is configured to perform the following operation: sending the UE capability information to the second network element.

Optionally, the UE capability information sent by the UE and received by the access network element includes UE network capability information, and in the process of managing the UE capability information, the processor 2402 is configured to perform the following operations: sending a first enquiry request to the UE, where the first enquiry request is used to enquire UE radio capability information; receiving the UE radio capability information sent by the UE; and managing the UE radio capability information.

Optionally, the UE capability information sent by the UE and received by the access network element includes UE radio capability information, and in the process of managing the UE capability information, the processor 2402 is configured to perform the following operations: sending a second enquiry request to the UE, where the second enquiry request is used to enquire UE network capability information; receiving the UE network capability information sent by the UE; and managing the UE network capability information.

Optionally, in the process of managing the UE capability information, the processor 2402 is configured to perform the following operations: if it is determined that a service scope for the UE is not satisfied, transmitting the UE capability information to a corresponding updated access network element; sending a first notification message to the second network element, where the first notification message is used to notify the second network element to subscribe to the UE capability information from the updated access network element, the first notification message carries network element information corresponding to the updated access network element; and receiving a first unsubscription request sent by the second network element, where the first unsubscription request is used to instruct the second network element to stop subscribing to the UE capability information from an access network element before update.

Optionally, the first network element is the core network element, the UE capability information sent by the UE and received by the core network element includes UE network capability information, and in the process of managing the UE capability information, the processor 2402 is configured to perform the following operations: sending a third enquiry request to the UE, where the third enquiry request is used to enquire UE radio capability information; receiving the UE radio capability information sent by the UE; and managing the UE radio capability information.

Optionally, in the process of managing the UE capability information, the processor 2402 is configured to perform the following operation: if it is determined that a service scope for the UE is not satisfied, transmitting the UE capability information to a corresponding updated core network element.

Optionally, the first network element is an AMF in the core network element, a third network element is a non-AMF network element in the core network element, the third network element subscribes to the UE capability information from the AMF, and in the process of managing the UE capability information, the processor 2402 is configured to perform the following operation: sending the UE capability information to the third network element.

Optionally, the UE capability information sent by the UE and received by the AMF includes UE network capability information, and in the process of managing the UE capability information, the processor 2402 is configured to perform the following operations: sending an initial context setup request message to an access network, where the request message does not carry UE radio capability information; receiving the UE radio capability information sent by the access network, where the UE radio capability information is obtained by the access network sending a fourth enquiry request to the UE, the fourth enquiry request is used to enquire the UE radio capability information; and managing the UE radio capability information.

Optionally, in the process of managing the UE capability information, the processor 2402 is configured to perform the following operations: if it is determined that the service scope for the UE is not satisfied, transmitting the UE capability information to a corresponding updated AMF; sending a second notification message to the third network element, where the second notification message is used to notify the third network element to subscribe to the UE capability information from the updated AMF, the second notification message carries network element information corresponding to the updated AMF; and receiving a second unsubscription request sent by the third network element, where the second unsubscription request is used to instruct the third network element to stop subscribing to the UE capability information from the AMF before update.

Optionally, the subscribing to the UE capability information includes subscribing to all UE capability information or subscribing to UE capability information corresponding to service requirements.

Optionally, the UE capability information includes updated UE capability information.

Optionally, in the process of managing the UE capability information, the processor 2402 is configured to perform the following operations: receiving UE status information sent by the UE, where the UE status information is used to indicate that the UE is in a deregistered state; and deleting the UE capability information corresponding to the UE.

Optionally, the UE capability information includes UE network capability information and UE radio capability information.

Optionally, the UE capability information further includes at least one of the following: sensing capability information, AI capability information, or computing capability information.

Optionally, the UE capability information is represented in the form of a UE category, and/or the UE capability information is represented in the form of a UE network capability information element.

It should be noted here that the above apparatus provided by the present disclosure can implement all method steps implemented by the first network element in the above method embodiments, and can achieve the same technical effects, and the parts and beneficial effects in this embodiment that are the same as those in the method embodiments will not be described in detail here.

FIG. 25, which is applied in a UE, is a second schematic structural diagram of a UE capability management apparatus under RAN servitization provided by an embodiment of the present disclosure. As shown in FIG. 25, the UE capability management apparatus under RAN servitization may include a transceiver 2501, a processor 2502, and a memory 2503.

The transceiver 2501 is configured to receive and send data under control of the processor 2502.

In FIG. 25, a bus architecture may include any number of interconnected buses and bridges. Specifically, one or more processors represented by processor 2502 and various circuits of memory represented by memory 2503 are linked together. The bus architecture may also link various other circuits, such as peripheral devices, voltage regulators and power management circuits, which are well known in the art, so they will not be further described here. The bus interface provides the interface. The transceiver 2501 may be a plurality of components, that is, including a transmitting end and a receiving end, and provides a unit for communicating with various other apparatuses over transmission media, where the transmission media include wireless channels, wired channels, optical cables, and other transmission media. Optionally, the UE capability management apparatus further includes a user interface 2504. For different user equipment, the user interface 2504 may also be an interface capable of externally connecting and internally connecting required devices, where the connected devices include but are not limited to a keypad, a display, a loudspeaker, a microphone, a joystick, and the like.

The processor 2502 is responsible for managing the bus architecture and general processing, and the memory 2503 may store data used by the processor 2502 when performing operations.

Optionally, the processor 2502 may be a CPU, an ASIC, an FPGA, or a CPLD, and the processor 2502 may also adopt a multi-core architecture.

The processor 2502, by invoking the computer program stored in the memory 2503, is configured to execute any UE capability management method related to the UE provided by the embodiment of the present disclosure in accordance with the obtained executable instructions. The processor 2502 and the memory 2503 may also be physically arranged separately.

Specifically, when the processor 2502 executes the computer program stored in the memory 2503, it implements the following operations: acquiring UE capability information; and sending the UE capability information to a first network element, where the first network element is an access network element under the RAN servitization, or the first network element is a core network element under the RAN servitization.

Optionally, the first network element is the access network element, and in the process of sending the UE capability information to the first network element, the processor 2502 is configured to perform the following operations: receiving a first enquiry request sent by the access network element, where the first enquiry request is used to enquire UE radio capability information, the first enquiry request is sent by the access network element when the UE capability information sent by the UE and received by the access network element includes UE network capability information; acquiring the UE radio capability information; and sending the UE radio capability information to the access network element.

Optionally, in the process of sending the UE capability information to the first network element, the processor 2502 is configured to perform the following operations: receiving a second enquiry request sent by the access network element, where the second enquiry request is used to enquire UE network capability information, the second enquiry request is sent by the access network element when the UE capability information sent by the UE and received by the access network element includes UE radio capability information; acquiring the UE network capability information; and sending the UE network capability information to the access network element.

Optionally, the first network element is the core network element, and in the process of sending the UE capability information to the first network element, the processor 2502 is configured to perform the following operations: receiving a third enquiry request sent by the core network element, where the third enquiry request is used to enquire UE radio capability information, the third enquiry request is sent by the core network element when the UE capability information sent by the UE and received by the core network element includes UE network capability information; acquiring the UE radio capability information; and sending the UE radio capability information to the core network element.

Optionally, the first network element is an AMF in the core network element, and in the process of sending the UE capability information to the first network element, the processor 2502 is configured to perform the following operations: receiving a fourth enquiry request sent by an access network, where the fourth enquiry request is used to enquire UE radio capability information, the fourth enquiry request is sent by the access network when the access network receives an initial context setup request message sent by the AMF, the request message does not carry UE radio capability information; and sending the UE radio capability information to the access network.

Optionally, in the process of sending the UE capability information to the first network element, the processor 2502 is configured to perform the following operations: if it is determined that the UE capability information changes and the UE is in an idle state, acquiring updated UE capability information; and sending the updated UE capability information to the first network element.

Optionally, in the process of sending the UE capability information to the first network element, the processor 2502 is configured to perform the following operations: if it is determined that the UE capability information changes and the UE is in a connected state, adjusting, by the UE, a state from the connected state to an idle state; acquiring updated UE capability information; and sending the updated UE capability information to the first network element.

Optionally, in the process of sending the UE capability information to the first network element, the processor 2502 is configured to perform the following operation: if it is determined that the UE is in a deregistered state, sending UE status information to the first network element, where the UE status information is used to indicate that the UE is in the deregistered state.

Optionally, the UE capability information includes UE network capability information and UE radio capability information.

Optionally, the UE capability information further includes at least one of the following: sensing capability information, AI capability information, or computing capability information.

Optionally, the UE capability information is represented in the form of a UE category, and/or the UE capability information is represented in the form of a UE network capability information element.

It should be noted here that the above apparatus provided by the present disclosure can implement all method steps implemented by the UE in the above method embodiments, and can achieve the same technical effects. The parts and beneficial effects in this embodiment that are the same as those in the method embodiments will not be specifically described again.

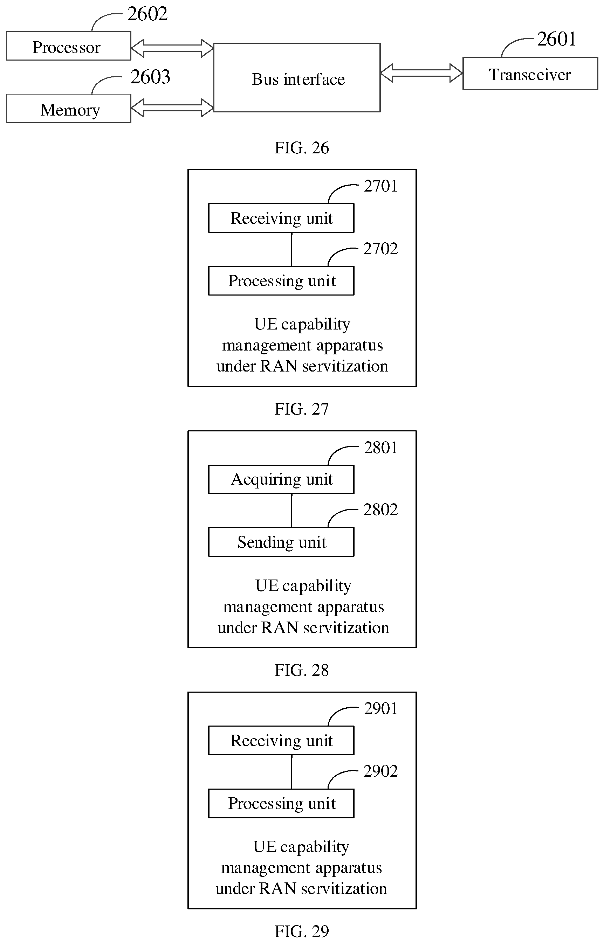

FIG. 26 is a third schematic structural diagram of a UE capability management apparatus under RAN servitization provided by an embodiment of the present disclosure, which is applied to a second network element or a third network element. The second network element subscribes to UE capability information from a first network element, the first network element is an access network element under the RAN servitization, or the third network element subscribes to the UE capability information from the first network element, the first network element is an AMF in a core network element under the RAN servitization. As shown in FIG. 26, the UE capability management apparatus under RAN servitization may include a transceiver 2601, a processor 2602, and a memory 2603.

The transceiver 2601 is configured to receive and send data under control of the processor 2602.

In FIG. 26, a bus architecture may include any number of interconnected buses and bridges. Specifically, one or more processors represented by processor 2602 and various circuits of memory represented by memory 2603 are linked together. The bus architecture may also link various other circuits, such as peripheral devices, voltage regulators and power management circuits, which are well known in the art, so they will not be further described here. The bus interface provides the interface. The transceiver 2601 may be a plurality of components, that is, including a transmitting end and a receiving end, and provides a unit for communicating with various other apparatuses over transmission media, where the transmission media include wireless channels, wired channels, optical cables, and other transmission media. The processor 2602 is responsible for managing the bus architecture and general processing, and the memory 2603 may store data used by the processor 2602 when performing operations.

Optionally, the processor 2602 may be a CPU, an ASIC, an FPGA, or a CPLD, and the processor 2602 may also adopt a multi-core architecture.

The processor 2602, by invoking the computer program stored in the memory 2603, is configured to execute any UE capability management method related to the second network element or the third network element provided by the embodiment of the present disclosure in accordance with the obtained executable instructions. The processor 2602 and the memory 2603 may also be physically arranged separately.

Specifically, when the processor 2602 executes the computer program stored in the memory 2603, it implements the following operations: receiving the UE capability information sent by the first network element; and managing the UE capability information.

It should be noted here that the above apparatus provided by the present disclosure can implement all method steps implemented by the second network element or the third network element in the above method embodiments, and can achieve the same technical effects. The parts and beneficial effects in this embodiment that are the same as those in the method embodiments will not be specifically described again.

FIG. 27 is a fourth schematic structural diagram of a UE capability management apparatus under RAN servitization provided by an embodiment of the present disclosure, which is applied to a first network element. The first network element is an access network element under the RAN servitization, or the first network element is a core network element under the RAN servitization. As shown in FIG. 27, the UE capability management apparatus under the RAN servitization includes a receiving unit 2701 and a processing unit 2702.

The receiving unit 2701 is configured to receive UE capability information sent by a UE.

The processing unit 2702 is configured to manage the UE capability information.

In some embodiments, the first network element is the access network element, a second network element is the core network element, the second network element subscribes to the UE capability information from the access network element, and the processing unit 2702 is specifically configured to: send the UE capability information to the second network element.

In some embodiments, the UE capability information sent by the UE and received by the access network element includes UE network capability information, and the processing unit 2702 is specifically configured to: send a first enquiry request to the UE, where the first enquiry request is used to enquire UE radio capability information; receive the UE radio capability information sent by the UE; and manage the UE radio capability information.

In some embodiments, the UE capability information sent by the UE and received by the access network element includes UE radio capability information, and the processing unit 2702 is specifically configured to: send a second enquiry request to the UE, where the second enquiry request is used to enquire UE network capability information; receive the UE network capability information sent by the UE; and manage the UE network capability information.

In some embodiments, the processing unit 2702 is specifically configured to: if it is determined that a service scope for the UE is not satisfied, transmit the UE capability information to a corresponding updated access network element; send a first notification message to the second network element, where the first notification message is used to notify the second network element to subscribe to the UE capability information from the updated access network element, the first notification message carries network element information corresponding to the updated access network element; and receive a first unsubscription request sent by the second network element, where the first unsubscription request is used to instruct the second network element to stop subscribing to the UE capability information from an access network element before update.

In some embodiments, the first network element is the core network element, the UE capability information sent by the UE and received by the core network element includes UE network capability information, and the processing unit 2702 is specifically configured to: send a third enquiry request to the UE, where the third enquiry request is used to enquire UE radio capability information; receive the UE radio capability information sent by the UE; and manage the UE radio capability information.

In some embodiments, the processing unit 2702 is specifically configured to: if it is determined that a service scope for the UE is not satisfied, transmit the UE capability information to a corresponding updated core network element.

In some embodiments, the first network element is an AMF in the core network element, a third network element is a non-AMF network element in the core network element, the third network element subscribes to the UE capability information from the AMF, and the processing unit 2702 is specifically configured to: send the UE capability information to the third network element.

In some embodiments, the UE capability information sent by the UE and received by the AMF includes UE network capability information, and the processing unit 2702 is specifically configured to: send an initial context setup request message to an access network, where the request message does not carry UE radio capability information; receive the UE radio capability information sent by the access network, where the UE radio capability information is obtained by the access network sending a fourth enquiry request to the UE, the fourth enquiry request is used to enquire the UE radio capability information; and manage the UE radio capability information.

In some embodiments, the processing unit 2702 is specifically configured to: if it is determined that the service scope for the UE is not satisfied, transmit the UE capability information to a corresponding updated AMF; send a second notification message to the third network element, where the second notification message is used to notify the third network element to subscribe to the UE capability information from the updated AMF, the second notification message carries network element information corresponding to the updated AMF; and receive a second unsubscription request sent by the third network element, where the second unsubscription request is used to instruct the third network element to stop subscribing to the UE capability information from the AMF before update.

In some embodiments, the subscribing to the UE capability information includes subscribing to all UE capability information or subscribing to UE capability information corresponding to service requirements.

In some embodiments, the UE capability information includes updated UE capability information.

In some embodiments, the processing unit 2702 is specifically configured to: receive UE status information sent by the UE, where the UE status information is used to indicate that the UE is in a deregistered state; and delete the UE capability information corresponding to the UE.

In some embodiments, the UE capability information includes UE network capability information and UE radio capability information.

In some embodiments, the UE capability information further includes at least one of the following: sensing capability information, AI capability information, or computing capability information.

In some embodiments, the UE capability information is represented in the form of a UE category, and/or the UE capability information is represented in the form of a UE network capability information element.

It should be noted here that the above apparatus provided by the present disclosure can implement all method steps implemented by the first network element in the above method embodiments, and can achieve the same technical effects, and the parts and beneficial effects in this embodiment that are the same as those in the method embodiments will not be described in detail here.

FIG. 28, which is applied in a UE, is a fifth schematic structural diagram of a UE capability management apparatus under RAN servitization provided by an embodiment of the present disclosure. As shown in FIG. 28, the UE capability management apparatus under RAN servitization includes an acquiring unit 2801 and a sending unit 2802.

The acquiring unit 2801 is configured to acquire UE capability information.

The sending unit 2802 is configured to send the UE capability information to a first network element, where the first network element is an access network element under the RAN servitization, or the first network element is a core network element under the RAN servitization.

In some embodiments, the first network element is the access network element, and the sending unit 2802 is specifically configured to: receive a first enquiry request sent by the access network element, where the first enquiry request is used to enquire UE radio capability information, the first enquiry request is sent by the access network element when the UE capability information sent by the UE and received by the access network element includes UE network capability information; acquire the UE radio capability information; and send the UE radio capability information to the access network element.

In some embodiments, the sending unit 2802 is specifically configured to: receive a second enquiry request sent by the access network element, where the second enquiry request is used to enquire UE network capability information, the second enquiry request is sent by the access network element when the UE capability information sent by the UE and received by the access network element includes UE radio capability information; acquire the UE network capability information; and send the UE network capability information to the access network element.

In some embodiments, the first network element is the core network element, and the sending unit 2802 is specifically configured to: receive a third enquiry request sent by the core network element, where the third enquiry request is used to enquire UE radio capability information, the third enquiry request is sent by the core network element when the UE capability information sent by the UE and received by the core network element includes UE network capability information; acquire the UE radio capability information; and send the UE radio capability information to the core network element.

In some embodiments, the first network element is an AMF in the core network element, and the sending unit 2802 is specifically configured to: receive a fourth enquiry request sent by an access network, where the fourth enquiry request is used to enquire UE radio capability information, the fourth enquiry request is sent by the access network when the access network receives an initial context setup request message sent by the AMF, the request message does not carry UE radio capability information; and send the UE radio capability information to the access network.

In some embodiments, the sending unit 2802 is specifically configured to: if it is determined that the UE capability information changes and the UE is in an idle state, acquire updated UE capability information; and send the updated UE capability information to the first network element.

In some embodiments, the sending unit 2802 is specifically configured to: if it is determined that the UE capability information changes and the UE is in a connected state, adjust, by the UE, a state from the connected state to an idle state; acquire updated UE capability information; and send the updated UE capability information to the first network element.

In some embodiments, the sending unit 2802 is specifically configured to: if it is determined that the UE is in a deregistered state, send UE status information to the first network element, where the UE status information is used to indicate that the UE is in the deregistered state.

In some embodiments, the UE capability information includes UE network capability information and UE radio capability information.

In some embodiments, the UE capability information further includes at least one of the following: sensing capability information, AI capability information, or computing capability information.

In some embodiments, the UE capability information is represented in the form of a UE category, and/or the UE capability information is represented in the form of a UE network capability information element.

It should be noted here that the above apparatus provided by the present disclosure can implement all method steps implemented by the UE in the above method embodiments, and can achieve the same technical effects. The parts and beneficial effects in this embodiment that are the same as those in the method embodiments will not be specifically described again.

FIG. 29 is a sixth schematic structural diagram of a UE capability management apparatus under RAN servitization provided by an embodiment of the present disclosure, which is applied to a second network element or a third network element. The second network element subscribes to UE capability information from a first network element, the first network element is an access network element under the RAN servitization, or the third network element subscribes to the UE capability information from the first network element, the first network element is an access and mobility management function AMF in a core network element under the RAN servitization. As shown in FIG. 29, the UE capability management apparatus under the RAN servitization includes a receiving unit 2901 and a processing unit 2902.

The receiving unit 2901 is configured to receive the UE capability information sent by the first network element.

The processing unit 2902 is configured to manage the UE capability information.

It should be noted here that the above apparatus provided by the present disclosure can implement all method steps implemented by the second network element or the third network element in the above method embodiments, and can achieve the same technical effects. The parts and beneficial effects in this embodiment that are the same as those in the method embodiments will not be specifically described again.

It should be noted that the division of units in the above embodiments of the present disclosure is schematic and is only a logical function division. There may be other division methods in actual implementation. In addition, the functional units in the various embodiments of the present disclosure may be integrated into a processing unit, or each unit may exist physically separately, or two or more units may be integrated into one unit. The above integrated units may be implemented in the form of hardware or in the form of software functional units.

When integrated units are implemented in the form of software functional units and sold or used as independent products, they may be stored in a processor-readable storage medium. Based on this understanding, the technical solution of the present disclosure is essentially or part of the contribution to the prior art or all or part of the technical solution can be embodied in the form of a software product. The computer software product is stored in a storage medium, including several instructions for enabling a computer device (which may be a personal computer, a server, or a network device, etc.) or a processor (processor) to execute all or part of the steps of the method described in each embodiment of the present disclosure. The aforementioned storage media include: U disk, mobile hard disk, read-only memory (Read-Only Memory, ROM), random access memory (Random Access Memory, RAM), disk or CD and other media that can store program code.

An embodiment of the present disclosure further provides a processor readable storage medium, where the processor readable storage medium stores a computer program, and the computer program is used to cause a processor to execute the UE capability management method under the RAN servitization provided by the embodiment of the present disclosure.

The computer-readable storage medium can be any available medium or data storage device that the processor can access, including but not limited to magnetic storage (such as floppy disk, hard disk, tape, magneto-optical disk (MO), etc.), optical storage (such as CD, DVD, BD, HVD, etc.), and semiconductor storage (such as ROM, EPROM, EEPROM, non-volatile memory (NAND FLASH), solid state drive (SSD)), etc.

An embodiment of the present disclosure further provides a computer program product including instructions, where when the instructions are run on a computer, the computer is caused to execute the UE capability management method under the RAN servitization provided by the embodiment of the present disclosure.

Those skilled in the art should understand that the embodiments of the present disclosure can be provided as methods, systems, or computer program products. Therefore, the present disclosure can take the form of a complete hardware embodiment, a complete software embodiment, or an embodiment combining software and hardware aspects. And the present disclosure may take the form of a computer program product implemented on one or more computer-usable storage media (including but not limited to disk storage and optical storage, etc.) containing computer-usable program codes.

The present disclosure is described with reference to flowcharts and/or block diagrams of method, apparatus, and computer program product according to embodiments of the present disclosure. It should be understood that each process and/or block in the flowchart and/or block diagram, as well as the combination of processes and/or blocks in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one or more processes of the flowchart and/or one or more blocks of the block diagram.

These processor executable instructions can also be stored in a processor readable memory that can guide a computer or other programmable data processing device to work in a specific manner, so that the instructions stored in the processor readable memory produce a manufactured product including an instruction device, which implements the functions specified in one or more processes of the flowchart and/or one or more blocks of the block diagram.

These processor executable instructions may also be loaded onto a computer or other programmable data processing device, so that a series of operating steps are executed on the computer or other programmable device to produce a computer-implemented process, so that the instructions executed on the computer or other programmable device provide steps for implementing the functions specified in one or more processes of the flowchart and/or one or more boxes of the block diagram.

Obviously, those skilled in the art may make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A user equipment capability management method under RAN servitization, **characterized by** being applied to a first network element, wherein the first network element is an access network element under the RAN servitization, or the first network element is a core network element under the RAN servitization, the UE capability management method comprises:
receiving UE capability information sent by a UE; and
managing the UE capability information.

2. The UE capability management method according to claim 1, wherein the first network element is the access network element, a second network element is the core network element, the second network element subscribes to the UE capability information from the access network element, and the managing the UE capability information comprises:
sending the UE capability information to the second network element.

3. The UE capability management method according to claim 2, wherein the UE capability information sent by the UE and received by the access network element comprises UE network capability information, and the managing the UE capability information comprises:
sending a first enquiry request to the UE, wherein the first enquiry request is used to enquire UE radio capability information;
receiving the UE radio capability information sent by the UE; and
managing the UE radio capability information.

4. The UE capability management method according to claim 2, wherein the UE capability information sent by the UE and received by the access network element comprises UE radio capability information, and the managing the UE capability information comprises:
sending a second enquiry request to the UE, wherein the second enquiry request is used to enquire UE network capability information;
receiving the UE network capability information sent by the UE; and
managing the UE network capability information.

5. The UE capability management method according to claim 2, wherein the managing the UE capability information comprises:
if it is determined that a service scope for the UE is not satisfied, transmitting the UE capability information to a corresponding updated access network element;
sending a first notification message to the second network element, wherein the first notification message is used to notify the second network element to subscribe to the UE capability information from the updated access network element, the first notification message carries network element information corresponding to the updated access network element; and
receiving a first unsubscription request sent by the second network element, wherein the first unsubscription request is used to instruct the second network element to stop subscribing to the UE capability information from an access network element before update.

6. The UE capability management method according to claim 1, wherein the first network element is the core network element, the UE capability information sent by the UE and received by the core network element comprises UE network capability information, the managing the UE capability information comprises:
sending a third enquiry request to the UE, wherein the third enquiry request is used to enquire UE radio capability information;
receiving the UE radio capability information sent by the UE; and
managing the UE radio capability information.

7. The UE capability management method according to claim 6, wherein the managing the UE capability information comprises:
if it is determined that a service scope for the UE is not satisfied, transmitting the UE capability information to a corresponding updated core network element.

8. The UE capability management method according to claim 1, wherein the first network element is an access and mobility management function AMF in the core network element, a third network element is a non-AMF network element in the core network element, the third network element subscribes to the UE capability information from the AMF, and the managing the UE capability information comprises:
sending the UE capability information to the third network element.

9. The UE capability management method according to claim 8, wherein the UE capability information sent by the UE and received by the AMF comprises UE network capability information, the managing the UE capability information comprises:
sending an initial context setup request message to an access network, wherein the request message does not carry UE radio capability information;
receiving the UE radio capability information sent by the access network, wherein the UE radio capability information is obtained by the access network sending a fourth enquiry request to the UE, the fourth enquiry request is used to enquire the UE radio capability information; and
managing the UE radio capability information.

10. The UE capability management method according to claim 8, wherein the managing the UE capability information comprises:
if it is determined that the service scope for the UE is not satisfied, transmitting the UE capability information to a corresponding updated AMF;
sending a second notification message to the third network element, wherein the second notification message is used to notify the third network element to subscribe to the UE capability information from the updated AMF, the second notification message carries network element information corresponding to the updated AMF; and
receiving a second unsubscription request sent by the third network element, wherein the second unsubscription request is used to instruct the third network element to stop subscribing to the UE capability information from the AMF before update.

11. The UE capability management method according to any one of claims 2, 5, 8, or 10, wherein the subscribing to the UE capability information comprises subscribing to all UE capability information or subscribing to UE capability information corresponding to service requirements.

12. The UE capability management method according to any one of claims 1 to 10, wherein the UE capability information comprises updated UE capability information.

13. The UE capability management method according to any one of claims 1 to 10, wherein the managing the UE capability information comprises:
receiving UE status information sent by the UE, wherein the UE status information is used to indicate that the UE is in a deregistered state; and
deleting the UE capability information corresponding to the UE.

14. The UE capability management method according to any one of claims 1 to 10, wherein the UE capability information comprises UE network capability information and UE radio capability information.

15. The UE capability management method according to claim 14, wherein the UE capability information further comprises at least one of the following: sensing capability information, artificial intelligence AI capability information, or computing capability information.

16. The UE capability management method according to any one of claims 1 to 10, wherein the UE capability information is represented in the form of a UE category, and/or the UE capability information is represented in the form of a UE network capability information element.

17. A user equipment capability management method under RAN servitization, **characterized by** being applied to a UE, wherein the UE capability management method comprises:
acquiring UE capability information; and
sending the UE capability information to a first network element, wherein the first network element is an access network element under the RAN servitization, or the first network element is a core network element under the RAN servitization.

18. The UE capability management method according to claim 17, wherein the first network element is the access network element, and the sending the UE capability information to the first network element comprises:
receiving a first enquiry request sent by the access network element, wherein the first enquiry request is used to enquire UE radio capability information, the first enquiry request is sent by the access network element when the UE capability information sent by the UE and received by the access network element comprises UE network capability information;
acquiring the UE radio capability information; and
sending the UE radio capability information to the access network element.

19. The UE capability management method according to claim 18, wherein the sending the UE capability information to the first network element comprises:
receiving a second enquiry request sent by the access network element, wherein the second enquiry request is used to enquire UE network capability information, the second enquiry request is sent by the access network element when the UE capability information sent by the UE and received by the access network element comprises UE radio capability information;
acquiring the UE network capability information; and
sending the UE network capability information to the access network element.

20. The UE capability management method according to claim 17, wherein the first network element is the core network element, and the sending the UE capability information to the first network element comprises:
receiving a third enquiry request sent by the core network element, wherein the third enquiry request is used to enquire UE radio capability information, the third enquiry request is sent by the core network element when the UE capability information sent by the UE and received by the core network element comprises UE network capability information;
acquiring the UE radio capability information; and
sending the UE radio capability information to the core network element.

21. The UE capability management method according to claim 17, wherein the first network element is an access and mobility management function AMF in the core network element, and the sending the UE capability information to the first network element comprises:
receiving a fourth enquiry request sent by an access network, wherein the fourth enquiry request is used to enquire UE radio capability information, the fourth enquiry request is sent by the access network when the access network receives an initial context setup request message sent by the AMF, the request message does not carry UE radio capability information; and
sending the UE radio capability information to the access network.

22. The UE capability management method according to claim 17, wherein the sending the UE capability information to the first network element comprises:
if it is determined that the UE capability information changes and the UE is in an idle state, acquiring updated UE capability information; and
sending the updated UE capability information to the first network element.

23. The UE capability management method according to claim 17, wherein the sending the UE capability information to the first network element comprises:
if it is determined that the UE capability information changes and the UE is in a connected state, adjusting, by the UE, a state from the connected state to an idle state;
acquiring updated UE capability information; and
sending the updated UE capability information to the first network element.

24. The UE capability management method according to any one of claims 17 to 23, wherein the sending the UE capability information to the first network element comprises:
if it is determined that the UE is in a deregistered state, sending UE status information to the first network element, wherein the UE status information is used to indicate that the UE is in the deregistered state.

25. The UE capability management method according to any one of claims 17 to 23, wherein the UE capability information comprises UE network capability information and UE radio capability information.

26. The UE capability management method according to claim 25, wherein the UE capability information further comprises at least one of the following: sensing capability information, artificial intelligence AI capability information, or computing capability information.

27. The UE capability management method according to any one of claims 17 to 23, wherein the UE capability information is represented in the form of a UE category, and/or the UE capability information is represented in the form of a UE network capability information element.

28. A user equipment capability management method under RAN servitization, **characterized by** being applied to a second network element or a third network element, wherein the second network element subscribes to UE capability information from a first network element, the first network element is an access network element under the RAN servitization, or the third network element subscribes to the UE capability information from the first network element, the first network element is an access and mobility management function AMF in a core network element under the RAN servitization, the UE capability management method comprises:
receiving the UE capability information sent by the first network element; and
managing the UE capability information.

29. A user equipment capability management apparatus under RAN servitization, **characterized by** comprising a memory, a transceiver, and a processor:
wherein the memory is configured to store a computer program;
the transceiver is configured to receive and send data under control of the processor; and
the processor is configured to read the computer program in the memory and perform the UE capability management method under the RAN servitization according to any one of claims 1 to 28.

30. A user equipment capability management apparatus under RAN servitization, **characterized by** being applied to a first network element, wherein the first network element is an access network element under the RAN servitization, or the first network element is a core network element under the RAN servitization, the UE capability management apparatus comprises:
a receiving unit, configured to receive UE capability information sent by a UE; and
a processing unit, configured to manage the UE capability information.

31. The UE capability management apparatus according to claim 30, wherein the first network element is the access network element, a second network element is the core network element, the second network element subscribes to the UE capability information from the access network element, and the processing unit is configured to:
send the UE capability information to the second network element.

32. The UE capability management apparatus according to claim 31, wherein the UE capability information sent by the UE and received by the access network element comprises UE network capability information, and the processing unit is configured to:
send a first enquiry request to the UE, wherein the first enquiry request is used to enquire UE radio capability information;
receive the UE radio capability information sent by the UE; and
manage the UE radio capability information.

33. The UE capability management apparatus according to claim 31, wherein the UE capability information sent by the UE and received by the access network element comprises UE radio capability information, and the processing unit is configured to:
send a second enquiry request to the UE, wherein the second enquiry request is used to enquire UE network capability information;
receive the UE network capability information sent by the UE; and
manage the UE network capability information.

34. The UE capability management apparatus according to claim 31, wherein the processing unit is configured to:
if it is determined that a service scope for the UE is not satisfied, transmit the UE capability information to a corresponding updated access network element;
send a first notification message to the second network element, wherein the first notification message is used to notify the second network element to subscribe to the UE capability information from the updated access network element, the first notification message carries network element information corresponding to the updated access network element; and
receive a first unsubscription request sent by the second network element, wherein the first unsubscription request is used to instruct the second network element to stop subscribing to the UE capability information from an access network element before update.

35. The UE capability management apparatus according to claim 30, wherein the first network element is the core network element, the UE capability information sent by the UE and received by the core network element comprises UE network capability information, and the processing unit is configured to:
send a third enquiry request to the UE, wherein the third enquiry request is used to enquire UE radio capability information;
receive the UE radio capability information sent by the UE; and
manage the UE radio capability information.

36. The UE capability management apparatus according to claim 35, wherein the processing unit is configured to:
if it is determined that a service scope for the UE is not satisfied, transmit the UE capability information to a corresponding updated core network element.

37. The UE capability management apparatus according to claim 30, wherein the first network element is an access and mobility management function AMF in the core network element, a third network element is a non-AMF network element in the core network element, the third network element subscribes to the UE capability information from the AMF, and the processing unit is configured to:
send the UE capability information to the third network element.

38. The UE capability management apparatus according to claim 37, wherein the UE capability information sent by the UE and received by the AMF comprises UE network capability information, the processing unit is configured to:
send an initial context setup request message to an access network, wherein the request message does not carry UE radio capability information;
receive the UE radio capability information sent by the access network, wherein the UE radio capability information is obtained by the access network sending a fourth enquiry request to the UE, the fourth enquiry request is used to enquire the UE radio capability information; and
manage the UE radio capability information.

39. The UE capability management apparatus according to claim 37, wherein the processing unit is configured to:
if it is determined that the service scope for the UE is not satisfied, transmit the UE capability information to a corresponding updated AMF;
send a second notification message to the third network element, wherein the second notification message is used to notify the third network element to subscribe to the UE capability information from the updated AMF, the second notification message carries network element information corresponding to the updated AMF; and
receive a second unsubscription request sent by the third network element, wherein the second unsubscription request is used to instruct the third network element to stop subscribing to the UE capability information from the AMF before update.

40. The UE capability management apparatus according to any one of claims 31, 34, 37, or 39, wherein the subscribing to the UE capability information comprises subscribing to all UE capability information or subscribing to UE capability information corresponding to service requirements.

41. The UE capability management apparatus according to any one of claims 30 to 39, wherein the UE capability information comprises updated UE capability information.

42. The UE capability management apparatus according to any one of claims 30 to 39, wherein the processing unit is configured to:
receive UE status information sent by the UE, wherein the UE status information is used to indicate that the UE is in a deregistered state; and
delete the UE capability information corresponding to the UE.

43. The UE capability management apparatus according to any one of claims 30 to 39, wherein the UE capability information comprises UE network capability information and UE radio capability information.

44. The UE capability management apparatus according to claim 43, wherein the UE capability information further comprises at least one of the following: sensing capability information, artificial intelligence AI capability information, or computing capability information.

45. The UE capability management apparatus according to any one of claims 30 to 39, wherein the UE capability information is represented in the form of a UE category, and/or the UE capability information is represented in the form of a UE network capability information element.

46. A user equipment capability management apparatus under RAN servitization, **characterized by** being applied to a UE, wherein the UE capability management apparatus comprises:
an acquisition unit, configured to acquire UE capability information; and
a sending unit, configured to send the UE capability information to a first network element, wherein the first network element is an access network element under the RAN servitization, or the first network element is a core network element under the RAN servitization.

47. The UE capability management apparatus according to claim 46, wherein the first network element is the access network element, and the sending unit is configured to:
receive a first enquiry request sent by the access network element, wherein the first enquiry request is used to enquire UE radio capability information, the first enquiry request is sent by the access network element when the UE capability information sent by the UE and received by the access network element comprises UE network capability information;
acquire the UE radio capability information; and
send the UE radio capability information to the access network element.

48. The UE capability management apparatus according to claim 47, wherein the sending unit is configured to:
receive a second enquiry request sent by the access network element, wherein the second enquiry request is used to enquire UE network capability information, the second enquiry request is sent by the access network element when the UE capability information sent by the UE and received by the access network element comprises UE radio capability information;
acquire the UE network capability information; and
send the UE network capability information to the access network element.

49. The UE capability management apparatus according to claim 46, wherein the first network element is the core network element, and the sending unit is configured to:
receive a third enquiry request sent by the core network element, wherein the third enquiry request is used to enquire UE radio capability information, the third enquiry request is sent by the core network element when the UE capability information sent by the UE and received by the core network element comprises UE network capability information;
acquire the UE radio capability information; and
send the UE radio capability information to the core network element.

50. The UE capability management apparatus according to claim 46, wherein the first network element is an access and mobility management function AMF in the core network element, and the sending unit is configured to:
receive a fourth enquiry request sent by an access network, wherein the fourth enquiry request is used to enquire UE radio capability information, the fourth enquiry request is sent by the access network when the access network receives an initial context setup request message sent by the AMF, the request message does not carry UE radio capability information; and
send the UE radio capability information to the access network.

51. The UE capability management apparatus according to claim 46, wherein the sending unit is configured to:
if it is determined that the UE capability information changes and the UE is in an idle state, acquire updated UE capability information; and
send the updated UE capability information to the first network element.

52. The UE capability management apparatus according to claim 46, wherein the sending unit is configured to:
if it is determined that the UE capability information changes and the UE is in a connected state, adjust, by the UE, a state from the connected state to an idle state;
acquire updated UE capability information; and
send the updated UE capability information to the first network element.

53. The UE capability management apparatus according to any one of claims 46 to 52, wherein the sending unit is configured to:
if it is determined that the UE is in a deregistered state, send UE status information to the first network element, wherein the UE status information is used to indicate that the UE is in the deregistered state.

54. The UE capability management apparatus according to any one of claims 46 to 52, wherein the UE capability information comprises UE network capability information and UE radio capability information.

55. The UE capability management apparatus according to claim 54, wherein the UE capability information further comprises at least one of the following: sensing capability information, artificial intelligence AI capability information, or computing capability information.

56. The UE capability management apparatus according to any one of claims 46 to 52, wherein the UE capability information is represented in the form of a UE category, and/or the UE capability information is represented in the form of a UE network capability information element.

57. A user equipment capability management apparatus under RAN servitization, **characterized by** being applied to a second network element or a third network element, wherein the second network element subscribes to UE capability information from a first network element, the first network element is an access network element under the RAN servitization, or the third network element subscribes to the UE capability information from the first network element, the first network element is an access and mobility management function AMF in a core network element under the RAN servitization, the UE capability management apparatus comprises:
a receiving unit, configured to receive the UE capability information sent by the first network element; and
a processing unit, configured to manage the UE capability information.

58. A processor-readable storage medium, **characterized in that** the processor-readable storage medium stores a computer program, the computer program is configured to cause the processor to execute the user equipment capability management method under the RAN servitization according to any one of claims 1 to 28.
